(19) Europäisches Patentamt
European Patent Office
Office européen des brevets

(11) EP 4 660 263 A1

(12) EUROPEAN PATENT APPLICATION
published in accordance with Art. 153(4) EPC

(43) Date of publication:
**10.12.2025 Bulletin 2025/50**

(21) Application number: **24750127.3**

(22) Date of filing: **25.01.2024**

(51) International Patent Classification (IPC):
***C09D 133/00*** *(2006.01)* ***B05D 1/36*** *(2006.01)*
***B05D 3/00*** *(2006.01)* ***B05D 3/02*** *(2006.01)*
***B05D 7/24*** *(2006.01)* ***C09D 5/00*** *(2006.01)*
***C09D 167/00*** *(2006.01)* ***C09D 175/04*** *(2006.01)*

(52) Cooperative Patent Classification (CPC):
**B05D 1/36; B05D 3/00; B05D 3/02; B05D 7/24; C09D 5/00; C09D 133/00; C09D 167/00; C09D 175/04**

(86) International application number:
**PCT/JP2024/002250**

(87) International publication number:
**WO 2024/162178 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013411**
**29.09.2023 PCT/JP2023/035702**

(71) Applicant: **Nippon Paint Automotive Coatings Co., Ltd.**
**Hirakata-shi, Osaka 573-1153 (JP)**

(72) Inventors:
- **KONDO, Masaaki**
  **Hirakata-shi, Osaka 573-1153 (JP)**
- **ISHIKAWA, Tomoyuki**
  **Hirakata-shi, Osaka 573-1153 (JP)**
- **KUMAZAKI, Aisaku**
  **Hirakata-shi, Osaka 573-1153 (JP)**
- **TAKAHASHI, Yuya**
  **Hirakata-shi, Osaka 573-1153 (JP)**
- **JIZODO, Azusa**
  **Hirakata-shi, Osaka 573-1153 (JP)**
- **FUKUI, Kaito**
  **Hirakata-shi, Osaka 573-1153 (JP)**
- **YAMAGUCHI, Kohei**
  **Hirakata-shi, Osaka 573-1153 (JP)**
- **ARAKI, Yoshito**
  **Hirakata-shi, Osaka 573-1153 (JP)**

(74) Representative: **Mewburn Ellis LLP**
**Aurora Building**
**Counterslip**
**Bristol BS1 6BX (GB)**

# (54) AQUEOUS MULTI-COMPONENT COATING COMPOSITION AND METHOD FOR PRODUCING COATED ARTICLE

(57) Provided is a water-borne coating composition capable of forming a coating film having a high hardness, an excellent glossy texture, and reduced spray dust while being curable at low temperatures. The water-borne multi-pack type coating composition includes: a first part including a hydroxy group-containing resin (A) and a melamine resin (B); and a second part including a hydrophilic polyisocyanate compound (D), wherein the hydroxy group-containing resin (A) is at least one of a hydroxy group-containing acrylic resin (A1) and a hydroxy group-containing polyester resin (A2), the melamine resin (B) is dissolved in the first part or has an average particle size of less than 1 μm, and has an average value of a total number of imino groups and methylol groups per triazine ring is more than 1, and the hydrophilic polyisocyanate compound (D) is at least one of an ionically modified polyisocyanate compound (D1) and a nonionically modified polyisocyanate compound (D2).

EP 4 660 263 A1

## Description

### TECHNICAL FIELD

The present invention relates to a water-borne multi-pack type coating composition and a method for producing a coated article.

### BACKGROUND ART

In recent years, in the technical field of automobiles and the like, consideration for the natural environment is required. Therefore, for the purpose of energy saving, a method involving lowering heating temperature during coating or shortening a heating time has been developed. For example, Patent Document 1 proposes a water-borne multi-pack type coating composition including a main resin (I) containing a hydroxy group-containing acrylic resin and a curing agent (II) containing an anionic hydrophilic group-containing polyisocyanate compound and/or a nonionic hydrophilic group-containing polyisocyanate compound. In Patent Document 1, a coating film is cured at a low temperature of 60°C.

### PRIOR ART DOCUMENT

### PATENT DOCUMENT

Patent Document 1: JP-A-2021-130812

### SUMMARY OF THE INVENTION

### PROBLEMS TO BE SOLVED BY THE INVENTION

According to Patent Document 1, the water-borne multi-pack type coating composition described above is superior in drying property, workability in handling coating materials, storage property, and weather resistance. However, a coating film obtained from the water-borne multi-pack type coating composition is low in hardness and poor in glossy texture, and may generate spray dust.

The present invention has been devised in view of the above facts, and an object of the present invention is to provide a water-borne multi-pack type coating composition capable of affording a coating film which is curable at a low temperature, has a high hardness, is superior in glossy texture, and has reduced spray dust.

### SOLUTIONS TO THE PROBLEMS

To solve the problems described above, the present invention provides the following embodiments.

[1] A water-borne multi-pack type coating composition comprising:

a first part including a hydroxy group-containing resin (A) and a melamine resin (B); and
a second part including a hydrophilic polyisocyanate compound (D), wherein
the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 μm, and has an average value of a total number of imino groups and methylol groups per triazine ring is more than 1, and
the hydrophilic polyisocyanate compound (D) is at least one of an ionically modified polyisocyanate compound (D1) and a nonionically modified polyisocyanate compound (D2).

[2] A water-borne multi-pack type coating composition comprising:

a first part including a hydroxy group-containing resin (A), a melamine resin (B), and a polyurethane resin (C); and
a second part including a hydrophilic polyisocyanate compound (D), wherein
the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 μm, and has an average value of a total number of imino groups and methylol groups per triazine ring is more than 1, and
the hydrophilic polyisocyanate compound (D) is at least one of an ionically modified polyisocyanate compound

(D1) and a nonionically modified polyisocyanate compound (D2).

[3] The water-borne multi-pack type coating composition according to [1] or [2], wherein the ionically modified polyisocyanate compound (D1) includes at least an anionically modified polyisocyanate compound.
[4] The water-borne multi-pack type coating composition according to [2], wherein the polyurethane resin (C) has a hydroxyl value of 30 mg KOH/g or less.
[5] The water-borne multi-pack type coating composition according to any one of [1] to [4], wherein the hydroxy group-containing resin (A) has an acid value of 5 mg KOH/g or more and 70 mg KOH/g or less.
[6] The water-borne multi-pack type coating composition according to any one of [1] to [5], wherein the melamine resin (B) has a solubility parameter of 9 or more and 15 or less.
[7] The water-borne multi-pack type coating composition according to any one of [1] to [6], wherein the melamine resin (B) has a solid content of 7 parts by mass or more and 40 parts by mass or less per 100 parts by mass of a solid content of the hydroxy group-containing resin (A).
[8] The water-borne multi-pack type coating composition according to [2], wherein the melamine resin (B) has a solid content of 7 parts by mass or more and 40 parts by mass or less per 100 parts by mass of a total solid content of the hydroxy group-containing resin (A) and the polyurethane resin (C).
[9] The water-borne multi-pack type coating composition according to any one of [1] to [8], wherein an equivalent ratio of imino groups and methylol groups of the melamine resin (B) to isocyanate groups of the hydrophilic polyisocyanate compound (D) (imino groups and methylol groups/isocyanate groups) is 0.2 or more and 1.1 or less.
[10] The water-borne multi-pack type coating composition according to any one of [1] to [9], wherein the melamine resin (B) has a number average molecular weight of 300 or more and 3000 or less.
[11] A method for producing a coated article, comprising:

forming an uncured first coating film by applying the water-borne multi-pack type coating composition according to any one of [1] to [10] onto an article to be coated;
forming an uncured clear coating film by applying a clear coating composition onto the uncured first coating film; and
curing the uncured first coating film and the uncured clear coating film by heating at 70°C or more and 110°C or less.

[12] A method for producing a coated article, comprising:

forming an uncured first coating film by applying the water-borne multi-pack type coating composition according to any one of [1] to [10] onto an article to be coated;
forming an uncured second coating film by applying a second water-borne coating composition onto the uncured first coating film;
forming an uncured clear coating film by applying a clear coating composition onto the uncured second coating film; and
curing the uncured first coating film, the uncured second coating film, and the uncured clear coating film by heating at 70°C or more and 110°C or less.

[13] The method for producing a coated article according to [11] or [12], wherein the article to be coated includes a metal portion and a resin portion.

EFFECTS OF THE INVENTION

According to the present invention, it is possible to provide a water-borne coating composition capable of forming a coating film having high hardness, being superior in glossy texture, and having reduced spray dust while being curable at a low temperature, and a method for producing a coated article using the water-borne coating composition.

DETAILED DESCRIPTION

1. First Embodiment

[Water-borne multi-pack type coating composition]

The water-borne multi-pack type coating composition (hereinafter sometimes simply referred to as water-borne coating composition) according to the first embodiment includes a first part including a hydroxy group-containing resin (A)

and a melamine resin (B) and a second part including a hydrophilic polyisocyanate compound (D). The hydroxy group-containing resin (A) is at least one of a hydroxy group-containing acrylic resin (A1) and a hydroxy group-containing polyester resin (A2). In the melamine resin (B), the average value of the total of the number of imino groups and the number of methylol groups per triazine ring is more than 1. The hydrophilic polyisocyanate compound (D) is at least one of an ionically modified polyisocyanate compound and a nonionically modified polyisocyanate compound.

Melamine resin is generally used as a curing agent for a hydroxy group-containing resin. However, melamine resin is not suitable as a curing agent for a coating composition to be cured at a low temperature because a reaction between melamine resin and a hydroxy group-containing resin occurs at a high temperature (for example, 140°C). Therefore, in a low-temperature-curable coating composition, a highly reactive polyisocyanate compound is usually used as a curing agent. However, the hardness of a coating film using such a coating composition tends to be low.

In the present disclosure, a melamine resin is used not as a curing agent (corresponding to the second part of the present disclosure) for directly forming a crosslinked structure with a hydroxy group-containing resin, but as a part of a main agent (corresponding to the first part of the present disclosure). That is, a melamine resin is used as a substance that reacts with a polyisocyanate compound together with a hydroxy group-containing resin. A melamine resin and a polyisocyanate compound can react together even at a low temperature. Therefore, when the water-borne coating composition according to the present disclosure is heated at a low temperature, a reaction between a hydroxy group-containing resin and a polyisocyanate compound and a reaction between a melamine resin and a polyisocyanate compound occur. A melamine resin has more than one imino group and/or methylol group that react with isocyanate groups of a polyisocyanate compound on average per triazine ring. Therefore, a reaction between a plurality of polyisocyanate compounds bonded to the hydroxy group-containing resin with the melamine resin may also occur. That is, the melamine resin is incorporated into a crosslinked structure of the hydroxy group-containing resin and the polyisocyanate compound, and for example, a crosslinked structure of the hydroxy group-containing resin - the polyisocyanate compound - the melamine resin - the polyisocyanate compound - the hydroxy group-containing resin is formed. A triazine ring, which has a planar structure and is rigid, of the melamine resin is incorporated into the crosslinked structure as described above, so that the hardness of a resulting coating film is increased.

Furthermore, it has been found that spray dust is reduced as a result of the fact that the melamine resin is contained as a part of a main resin. Spray dust is a projection of the surface of a coating film formed via a mechanism in which during spray coating, a coating composition that failed to attach to an article to be coated scatters in the air to form droplets, and the droplets attach to the article to be coated. Spray dust is typically formed in the process in which the solvent contained in the droplets evaporates, and is generated when the coating film and the droplets failed to be compatibilized with each other. Therefore, the spray dust is more easily formed as the coating composition (droplet) has a higher viscosity. Melamine resin generally has a low molecular weight. Therefore, it is considered that the viscosity of the coating composition containing the melamine resin is kept low, and as a result, formation of spray dust is reduced.

In the present disclosure, the hydrophilic polyisocyanate compound (D) is used as a curing agent as described above. The hydrophilic polyisocyanate compound (D) has a hydrophilic group and two or more isocyanate groups in a molecule.

Since a coating film is formed as a result of a reaction of the curing agent with the main resin, the dispersion state of the curing agent in the coating composition is reflected on the smoothness of the coating film. The hydrophilic polyisocyanate compound (D) to be used in the present disclosure is present in the form of micelles in which a hydrophilic group portion surrounds a hydrophobic portion in a water-borne coating composition, and is highly dispersed. Therefore, a resulting coating film has superior smoothness. A smooth coating film is superior in glossy texture.

As used herein, the term "isocyanate group" means an unblocked free isocyanate group. Due to the fact that the isocyanate group is not blocked, low-temperature curing is possible. Specifically, the hydrophilic polyisocyanate compound (D) is a polyisocyanate compound dispersible in water.

The water-borne coating composition is of a multi-pack type type including a first part and a second part. The water-borne coating composition may further include a third package including other components. The water-borne coating composition is prepared using a method commonly used by those skilled in the art. The water-borne coating composition can be prepared by mixing the first part and the second part. In another embodiment, the water-borne coating composition can be prepared by mixing the first part, the second part, and the third package. Examples of the mixing method include a kneading mixing method using a kneader, a roll, or the like, and a dispersion mixing method using a sand grinding mill, a disper, or the like.

The water-borne coating composition includes water as a solvent. In the water-borne coating composition, the proportion of water accounting for in the solvent may be 50% by mass or more, 70% by mass or more, or 100% by mass.

The water-borne coating composition according to the present disclosure is curable at a low temperature. The water-borne coating composition according to the present disclosure can be cured, for example, at a temperature of 70°C or more and 110°C or less. The curing temperature may be 75°C or more, and may be 80°C or more. The curing temperature may be 105°C or less, 100°C or less, 95°C or less, or 90°C or less.

Hereinafter, a solid component is also referred to as a nonvolatile component. Specifically, the solid component of

the water-borne coating composition is all components of the water-borne coating composition excluding the solvent.

(First part)

The first part includes a hydroxy group-containing resin (A) and a melamine resin (B).

(A) Hydroxy group-containing resin

The hydroxy group-containing resin (A) is a resin to serve as a base of a coating film (a coating film forming component). The coating film forming component chemically reacts with other components contained in the water-borne coating composition to constitute a coating film, that is, a resin film. The hydroxy group-containing resin (A) reacts with the hydrophilic polyisocyanate compound (D) to form a crosslinked structure. The hydroxy group-containing resin (A) affords a coating film having sufficient hardness.

The hydroxy group-containing resin (A) has one or more (typically two or more) hydroxy groups in one molecule. The hydroxy group-containing resin (A) is at least one of a hydroxy group-containing acrylic resin (A1) and a hydroxy group-containing polyester resin (A2).

The hydroxyl value (OHV) of the hydroxy group-containing resin (A) is, for example, 20 mg KOH/g or more and 180 mg KOH/g or less. When the hydroxyl value of the hydroxy group-containing resin (A) is 20 mg KOH/g or more, the breaking strength of the coating film tends to be high. When the hydroxyl value of the hydroxy group-containing resin (A) is 180 mg KOH/g or less, hydrophilization of the coating film is inhibited, and water resistance is easily improved. The hydroxyl value of the hydroxy group-containing resin (A) may be 30 mg KOH/g or more, or 40 mg KOH/g or more. The hydroxyl value of the hydroxy group-containing resin (A) may be 150 mg KOH/g or less, 140 mg KOH/g or less, 100 mg KOH/g or less, or 80 mg KOH/g or less.

The glass transition temperature (Tg) of the hydroxy group-containing resin (A) is, for example, -20°C or more and 100°C or less. When the Tg of the hydroxy group-containing resin (A) is -20°C or more, the breaking strength and the hardness of a resulting coating film are easily improved. When the Tg of the hydroxy group-containing resin (A) is 100°C or less, the quick-drying property of the water-borne coating composition is easily improved. The Tg of the hydroxy group-containing resin (A) may be -15°C or more. The Tg of the hydroxy group-containing resin (A) may be 90°C or less, 80°C or less, 70°C or less, or 50°C or less.

The Tg may be determined by calculation from the type and the amount of the starting monomers of the resin. The Tg also may be measured with a differential scanning calorimeter (DSC).

The hydroxy group-containing resin (A) may have an acid value (AV) of 5 mg KOH/g or more and 70 mg KOH/g or less. When the acid value of the hydroxy group-containing resin (A) is 5 mg KOH/g or more, the hardness of a resulting coating film is easily improved. When the acid value of the hydroxy group-containing resin (A) is 70 mg KOH/g or less, the water resistance of a resulting coating film can be improved. The acid value of the hydroxy group-containing resin (A) may be 7 mg KOH/g or more, or 10 mg KOH/g or more. The acid value of the hydroxy group-containing resin (A) may be 60 mg KOH/g or less, 50 mg KOH/g or less, or 40 mg KOH/g or less.

The hydroxyl value and the acid value are determined on the basis on the solid content. The hydroxyl value and the acid value can be measured by the publicly known method described in JIS K 0070: 1992. The hydroxyl value and the acid value may be calculated from the blending amount of the unsaturated monomer in the starting monomer of the target resin.

From the viewpoint of hardness, the hydroxy group-containing resin (A) may have a hydroxyl value of 20 mg KOH/g or more and 180 mg KOH/g or less, a Tg of -20°C or more and 100°C or less, and an acid value of 5 mg KOH/g or more and 70 mg KOH/g or less.

The weight average molecular weight (Mw) of the hydroxy group-containing resin (A) may be, for example, 2,000 or more and 50,000 or less. The Mw is determined by GPC using polystyrene as a standard.

When the hydroxy group-containing resin (A) is dispersed in the first part, the average particle size thereof may be, for example, 50 nm or more and 500 nm or less. When the average particle size of the hydroxy group-containing resin (A) is in the above range, coating material stability is improved, and the smoothness of a resulting coating film is also improved. The average particle size of the hydroxy group-containing resin (A) may be 80 nm or more. The average particle size of the hydroxy group-containing resin (A) may be 300 nm or less.

The average particle size of the hydroxy group-containing resin (A) is measured by a laser diffraction/scattering method in accordance with JIS Z 8825. For this measurement, for example, a laser Doppler type particle size analyzer can be used. A specific example is Microtrac UPA150 (manufactured by Nikkiso Co., Ltd.). The average particle size of the hydroxy group-containing resin (A) is measured using a sample diluted to a resin solid component concentration of 0.01% by mass using ion-exchanged water.

(A1) Hydroxy group-containing acrylic resin

The hydroxy group-containing acrylic resin (A1) can be produced, for example, by polymerizing a hydroxy group-containing α,β-ethylenically unsaturated monomer with another α,β-ethylenically unsaturated monomer by a known method. A commercially available hydroxy group-containing acrylic resin may be used.

In one embodiment, the hydroxy group-containing acrylic resin (A1) may be in an emulsion form. The hydroxy group-containing acrylic resin in an emulsion form (hydroxy group-containing acrylic resin emulsion) may have a multilayer structure including a core part and a shell part covering at least a part of the surface of the core part, or may have a single layer structure.

The hydroxy group-containing acrylic resin emulsion is prepared by emulsion polymerization of a mixture of the above-mentioned monomers. The emulsion polymerization may be performed by a polymerization method commonly performed by a person skilled in the art. Specifically, the emulsion polymerization is performed by mixing an emulsifier in an aqueous medium including water and, as necessary, an organic solvent such as alcohol, and dropping the monomer mixture and a polymerization initiator under heating and stirring. The emulsion polymerization may also be performed by dropping an emulsified mixture obtained by mixing and emulsifying the monomer mixture, an emulsifier, and an aqueous medium. As the polymerization initiator, the emulsifier, and the like, those known to those skilled in the art can be used without particular limitation.

Examples of the hydroxy group-containing α,β-ethylenically unsaturated monomer include hydroxyethyl (meth) acrylate, hydroxypropyl (meth)acrylate, hydroxybutyl (meth)acrylate, allyl alcohol, methallyl alcohol, and adducts of these with ε-caprolactone.

(Meth)acrylic acid includes both methacrylic acid and acrylic acid.

Examples of the α,β-ethylenically unsaturated monomer other than those described above include carboxylic acids such as acrylic acid, methacrylic acid, ethacrylic acid, crotonic acid, maleic acid, fumaric acid, and itaconic acid, and dicarboxylic acid monoesters thereof; styrenes such as styrene and α-methylstyrene; acrylic acid esters such as methyl acrylate, ethyl acrylate, propyl acrylate, n-butyl, isobutyl, and tert-butyl acrylates, 2-ethylhexyl acrylate, allyl acrylate, and lauryl acrylate; methacrylic acid esters such as methyl methacrylate, ethyl methacrylate, propyl methacrylate, n-butyl, isobutyl, and tert-butyl methacrylates, 2-ethylhexyl methacrylate, allyl methacrylate, and lauryl methacrylate; polymerizable amide compounds such as acrylamide and methacrylamide; and other polymerizable compounds such as polymerizable aromatic compounds, polymerizable nitriles, polymerizable alkylene oxide compounds, polyfunctional vinyl compounds, polymerizable amine compounds, α-olefins, dienes, polymerizable carbonyl compounds, and polymerizable alkoxysilyl compounds.

The average particle size of the hydroxy group-containing acrylic resin emulsion may be, for example, 50 nm or more and 500 nm or less. When the average particle size of the hydroxy group-containing acrylic resin emulsion is in the above range, coating material stability is improved, and the smoothness of a resulting coating film is also improved. The average particle size of the hydroxy group-containing acrylic resin emulsion may be 80 nm or more. The average particle size of the hydroxy group-containing acrylic resin emulsion may be 300 nm or less.

In one embodiment, the hydroxy group-containing acrylic resin (A1) may be soluble in water. The hydroxy group-containing acrylic resin soluble in water (hydroxy group-containing water-soluble acrylic resin) can be prepared, for example, by subjecting a monomer mixture containing the above-described monomers to solution polymerization.

The weight average molecular weight (Mw) of the hydroxy group-containing water-soluble acrylic resin is, for example, 4,000 or more and 50,000 or less. When the Mw of the hydroxy group-containing water-soluble acrylic resin is 4,000 or more, the hardness and the weather resistance of a resulting coating film are easily improved. When the Mw of the hydroxy group-containing water-soluble acrylic resin is 50,000 or less, an excessive increase in viscosity of the water-borne coating composition is easily suppressed. The Mw of the hydroxy group-containing water-soluble acrylic resin may be 5,000 or more, or 8,000 or more. The Mw of the hydroxy group-containing water-soluble acrylic resin may be 40,000 or less, or 30,000 or less.

In one embodiment, the hydroxy group-containing resin (A) may include a hydroxy group-containing acrylic resin emulsion and a hydroxy group-containing water-soluble acrylic resin. In this case, the ratio of the solid content We of the hydroxy group-containing acrylic resin emulsion to the solid content Ws of the hydroxy group-containing water-soluble acrylic resin may be, for example, We/Ws = 8/1 to 1/4, and may be 7/1 to 1/3.

(A2) Hydroxy group-containing polyester resin

The hydroxy group-containing polyester resin is obtained by, for example, subjecting a polyhydric alcohol and a polybasic acid or an anhydride thereof to polycondensation (esterification reaction). A commercially available hydroxy group-containing polyester resin may be used.

The polyhydric alcohol is not particularly limited, and examples thereof include ethylene glycol, diethylene glycol, polyethylene glycol, propylene glycol, dipropylene glycol, polypropylene glycol, neopentyl glycol, 1,2-butanediol, 1,3-butanediol, 2,3-butanediol, 1,4-butanediol, 1,5-pentanediol, 1,6-hexanediol, hydrogenated bisphenol A, hydroxyalkylated bisphenol A, 1,4-cyclohexanedimethanol, 2,2-dimethyl-3-hydroxypropyl-2,2-dimethyl-3-hydroxypropionate, 2,2,4-trimethyl-1,3-pentanediol, N,N-bis-(2-hydroxyethyl)dimethylhydantoin, polytetramethylene ether glycol, polycaprolactone polyol, glycerin, sorbitol, trimethylolethane, trimethylolpropane, trimethylolbutane, hexanetriol, pentaerythritol, dipentaerythritol, and tris-(hydroxyethyl) isocyanate. These are used singly or two or more of them are used in combination.

The polybasic acid or an anhydride thereof is not particularly limited, and examples thereof include phthalic acid, phthalic anhydride, tetrahydrophthalic acid, tetrahydrophthalic anhydride, hexahydrophthalic acid, hexahydrophthalic anhydride, methyltetrahydrophthalic acid, methyltetrahydrophthalic anhydride, hymic anhydride, trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebacic acid, succinic acid, succinic anhydride, lactic acid, dodecenylsuccinic acid, dodecenylsuccinic anhydride, cyclohexane-1,4-dicarboxylic acid, and endic anhydride. These are used singly or two or more of them are used in combination.

The hydroxy group-containing polyester resin may be modified using lactone, fat, fatty acid, melamine resin, urethane resin, or the like. The fat or fatty acid is not particularly limited, and examples thereof include oils or fats such as castor oil, dehydrated castor oil, coconut oil, corn oil, cottonseed oil, linseed oil, perilla oil, poppy seed oil, safflower oil, soybean oil, and tung oil, and fatty acid extracted from these oils or fats.

The weight average molecular weight (Mw) of the hydroxy group-containing polyester resin (A2) is, for example, 2,000 or more and 20,000 or less. When the Mw of the hydroxy group-containing polyester resin (A2) is 2,000 or more, the hardness and the weather resistance of a resulting coating film are easily improved. When the Mw of the hydroxy group-containing polyester resin (A2) is 20,000 or less, an excessive increase in viscosity of the water-borne coating composition is easily suppressed. The Mw of the hydroxy group-containing polyester resin (A2) may be 2,300 or more, or 2,500 or more. The Mw of the hydroxy group-containing polyester resin (A2) may be 10,000 or less, 9,000 or less, or 8,000 or less.

<<Other hydroxy group-containing components>>

The first part may include, for example, a polycarbonate polyol resin, a polyether polyol resin, or a polycaprolactone polyol resin as other hydroxy group-containing components.

The solid content proportion of the hydroxy group-containing components other than the hydroxy group-containing resin (A) accounting for in 100% by mass of the total solid content of the hydroxy group-containing components is, for example, 20% by mass or less, may be 15% by mass or less, and may be 10% by mass or less.

(B) Melamine resin

The melamine resin (B) is a coating film forming component. As described above, the melamine resin (B) reacts with the hydrophilic polyisocyanate compound (D) and is incorporated into a crosslinked structure of the hydroxy group-containing resin (A) and the hydrophilic polyisocyanate compound (D), whereby a coating film having high hardness is obtained.

The melamine resin (B) may be soluble in water or insoluble in water. The melamine resin (B) soluble in water is dissolved in the first part. Therefore, the melamine resin (B) can efficiently react with the hydrophilic polyisocyanate compound (D). In addition, the smoothness of a resulting coating film is hardly impaired, and a superior glossy texture is obtained.

The dispersion diameter of the melamine resin (B) in the first part and in the water-borne coating composition can be regarded as the average particle size of the melamine resin (B) in a liquid material (the liquid component is n-butanol or isobutanol) having a concentration of 70%. In the liquid material, the melamine resin (B) is dissolved or finely dispersed.

The average particle size of the melamine resin (B) may be 0.1 μm or less, 0.05 μm or less, or 0.01 μm or less. The average particle size of the melamine resin (B) may be less than the effective measurement range of an analyzer.

The average particle size of the melamine resin (B) is a 50% average particle size (D50) in a volume-based particle size distribution of the liquid material determined using a laser diffraction/scattering type particle size distribution analyzer. Examples of the particle size distribution analyzer include Microtrac UPA150 (manufactured by Nikkiso Co., Ltd.). The effective measurement range of the analyzer is 0.003 μm to 6.5 μm.

The first part and the water-borne coating composition may contain the melamine resin having an average particle size of 1 μm or more as long as the effect of the present embodiment is not impaired. The content of the large-particle-size melamine resin is, for example, 1 part by mass or less, 0.5 parts by mass or less, or 0 parts by mass per 100 parts by mass of the solid content of the hydroxy group-containing resin (A).

Since the melamine resin (B) is dissolved or finely dispersed, the solubility parameter (SP value) of the melamine

resin (B) can be measured by turbidimetry. Acetone (HSP value δg measured by Hansen: 9.77) is used as a good solvent, and hexane (SP value δpl: 7.24) and deionized water (SP value δph: 23.50) are used as a poor solvent. The SP value of the melamine resin (B) determined by turbidimetry using the good solvent and the poor solvents may be 9 or more and 15 or less. The SP value of the melamine resin (B) may be 9.5 or more, or 10.0 or more. The SP value of the melamine resin (B) may be 14.8 or less, or 14.5 or less.

The SP value of the melamine resin (B) can be determined by dissolving the melamine resin (B) in a good solvent having a known SP value, and performing turbidimetric titration with a poor solvent having an SP value higher than that of the good solvent and a poor solvent having a lower SP value. Regarding the method for determining the SP value, reference can be made to Document 1: C. M. Hansen, J. Paint Tech., 39 [505], 104 (1967) and Document 2: Toshikatsu Kobayashi, Journal of the Japan Society of Color Material, 77 [4], 188-192 (2004)).

Specifically, the SP value of the melamine resin (B) is determined as follows.

Measurement temperature: 20°C
Good solvent: acetone (HSP value δg = 9.77)
Poor solvent: Hexane (SP value δpl = 7.24), deionized water (SP value δph = 23.50)
Sample: 0.5 g of the melamine resin (B) is weighed in a 100 ml beaker, and 10 ml of a good solvent is added with a whole pipette and dissolved with a magnetic stirrer.

(Turbidity measurement)

Hexane is added dropwise to the sample, and the volume fraction $\varphi_{pl}$ of hexane at the point where clouding occurs is calculated. Next, the SP value $\delta_{ml}$ of the melamine resin (B) attained when hexane is used as a poor solvent is determined by the following formula.

[Expression 1]

$$\delta_{ml} = \phi_{pl}\,\delta_{pl} + (1 - \phi_{pl})\,\delta_g$$

Separately, deionized water is added dropwise to a sample prepared in the same manner, and a volume fraction $\varphi_{ph}$ of deionized water at the point where clouding occurs is calculated. Next, the SP value $\delta_{mh}$ of the melamine resin (B) attained when deionized water is used as a poor solvent is determined by the following formula.

[Expression 2]

$$\delta_{mh} = \phi_{ph}\,\delta_{ph} + (1 - \phi_{ph})\,\delta_g$$

The SP value ($\delta_{poly}$) of the melamine resin (B) is an intermediate value between $\delta_{ml}$ and $\delta_{mh}$, and is calculated by the following formula.

[Expression 3]

$$\delta_{poly} = (\delta_{ml} + \delta_{mh}) / 2$$

Since the melamine resin (B) is dissolved or finely dispersed, the melamine resin (B) has almost no light diffusibility and almost no light refractivity. The liquid material of the melamine resin (B) (having at a concentration of 70% and including n-butanol or isobutanol as a solvent) may have a Gardner color scale of 2 or less as determined by comparison with a standard color glass, and the Gardner color scale may be 1.

The Gardner color scale is a method for objectively evaluating hue and transparency of chemical products. The Gardner color scale is evaluated in accordance with JIS K 0071-2:1998 (Testing methods for color of chemical products - Part 2: Gardner color scale). It can be said that the higher the Gardner color scale is, the darker the color is and the more opaque the sample is. The liquid material of the melamine resin (B) can be evaluated to be colorless and transparent.

Table 1 shows "Chromaticity coordinates of Gardner standard color glass" described in JIS K 0071-2:1998. The standard color glass number with which the color of the sample matched is the Gardner color scale of the sample. When the Gardner color scale is 2 or less, the color coordinate x of the sample is 0.3177 or less, the color coordinate y is 0.3303 or

less, and the luminous transmittance Y is 80% or more.

[Table 1]

| Table 1 Chromaticity coordinates of Gardner standard color glass | | | | |
|---|---|---|---|---|
| Gardner standard color glass number | Chromaticity coordinate | | Luminous transmittance Y% | Transmittance tolerance Y% (±) |
| | x | y | | |
| 1 | 0.317 7 | 0.330 3 | 80 | 7 |
| 2 | 0.323 3 | 0.335 2 | 79 | 7 |
| 3 | 0.332 9 | 0.345 2 | 76 | 6 |
| 4 | 0.343 7 | 0.364 4 | 75 | 5 |
| 5 | 0.355 8 | 0.384 0 | 74 | 4 |
| 6 | 0.376 7 | 0.406 1 | 71 | 4 |
| 7 | 0.404 4 | 0.435 2 | 67 | 4 |
| 8 | 0.420 7 | 0.449 8 | 64 | 4 |
| 9 | 0.434 3 | 0.464 0 | 61 | 4 |
| 10 | 0.450 3 | 0.476 0 | 57 | 4 |
| 11 | 0.484 2 | 0.481 8 | 45 | 4 |
| 12 | 0.507 7 | 0.463 8 | 36 | 5 |
| 13 | 0.539 2 | 0.445 8 | 30 | 6 |
| 14 | 0.564 6 | 0.427 0 | 22 | 6 |
| 15 | 0.585 7 | 0.408 9 | 16 | 2 |
| 16 | 0.604 7 | 0.392 1 | 11 | 1 |
| 17 | 0.629 0 | 0.370 1 | 6 | 1 |
| 18 | 0.6477 | 0.352 1 | 4 | 1 |

The melamine resin (B) has a low melting point. The melting point of the melamine resin (B) may be -20°C or less. Owing to the fact that the melamine resin (B) has a low melting point, the viscosity of the water-borne coating composition is kept low, spray dust is further reduced, and the glossy texture is further improved. The melamine resin (B) may be liquid at a temperature of -20°C or more and 70°C or less.

The melting point of the melamine resin (B) can be evaluated, for example, by the following method for convenience. First, a mixture of a solvent and the melamine resin (B) is thinly spread on a plastic container. After heating at 70°C for 1 hour to remove the solvent, the fluidity in an environment of from 20°C to -20°C is visually confirmed. The temperature at which the fluidity is lost is regarded as the melting point of the melamine resin (B) for convenience.

The melamine resin (B) has a structure in which six substituents $R^1$ to $R^6$ are bonded to the periphery of a triazine ring (triazine nucleus) via three nitrogen atoms $N^1$ to $N^3$ ($-N^1(R^1)(R^2)$, $-N^2(R^3)(R^4)$, $-N^3(R^5)(R^6)$).

The melamine resin (B) contains, for example, a structure represented by the following general formula (1):

[Chemical Formula 1]

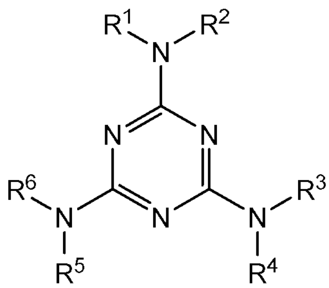

wherein the substituents $R^1$ to $R^6$ each independently represent a hydrogen atom, an alkyl ether group, a methylol group, or a bonding moiety with another triazine ring.

The number of the carbon atoms of the alkyl group ($R^7$) constituting the alkyl ether ($-CH_2-OR^7$) may be 1 to 8, or 1 to 4. $R^7$ may be linear or branched. $R^7$ may be a methyl group, an ethyl group, a propyl group, or a butyl group.

The melamine resin (B) is generally constituted of a polynuclear body in which a plurality of triazine rings is

bonded together. Alternatively, the melamine resin (B) may be a mononuclear body constituted of a single triazine ring.

Examples of the melamine resin (B) include a methylol group type having - $N(-CH_2-OR^7)(-CH_2OH)$; an imino group type having $-N(-CH_2-OR^7)(H)$; a methylol/imino group type having $-N(-CH_2-OR^7)(-CH_2OH)$ and $-N(-CH_2-OR^7)(H)$.

It is noted that the average value of the total of the number of imino groups and the number of methylol groups per triazine ring (hereinafter, sometimes simply referred to as the average number of functional groups) is more than 1. As a result, the melamine resin (B) is easily incorporated into the crosslinked structure, and the hardness of the coating film is increased. The average number of functional groups may be 1.2 or more, 1.5 or more, or 2.0 or more. The average number of functional groups may be 4 or less, or 3.5 or less. As a result, physical properties such as hardness and flexibility to metal thermal expansion tend to fall within desirable ranges.

The use of a fully-alkylated type melamine resin having only an alkyl ether group as the substituents $R^1$ to $R^6$ is not excluded. However, from the viewpoint of coating film physical properties such as flexibility, it is desirable that the use amount thereof is small. For example, the use amount of the fully-alkylated type melamine resin accounting for in 100% by mass of the total solid content of the melamine resin included in the first part may be 10% by mass or less, 5% by mass or less, or 0% by mass.

The number average molecular weight (Mn) of the melamine resin (B) may be 300 or more and 3000 or less. As a result, the viscosity of the water-borne coating composition is kept low, spray dust is further reduced, and the glossy texture is further improved. The number average molecular weight of the melamine resin (B) may be 2500 or less, 2000 or less, 1500 or less, or 1300 or less. The number average molecular weight of the melamine resin (B) may be 350 or more, or 400 or more.

The solid content of the melamine resin (B) may be, for example, 7 parts by mass or more and 50 parts by mass or less per 100 parts by mass of the solid content of the hydroxy group-containing resin (A). As a result, a curing reaction easily proceeds, and a coating film having high hardness is easily obtained. The solid content of the melamine resin (B) may be 15 parts by mass or more, 17 parts by mass or more, or 20 parts by mass or more. The solid content of the melamine resin (B) may be 45 parts by mass or less, 40 parts by mass or less, or 35 parts by mass or less. In one embodiment, the solid content of the melamine resin (B) is 7 parts by mass or more and 40 parts by mass or less per 100 parts by mass of the solid content of the hydroxy group-containing resin (A).

The equivalent ratio of the imino groups and the methylol groups (hereinafter, these groups may be referred to as imino groups and the like) of the melamine resin (B) to the isocyanate groups of the hydrophilic polyisocyanate compound (D) (imino groups and the like/isocyanate groups) may be 0.2 or more and 1.1 or less. As a result, a reaction between the melamine resin (B) and the hydrophilic polyisocyanate compound (D) easily occurs.

When the equivalent ratio (imino groups and the like/isocyanate groups) is 1.0, imino groups and methylol groups react with isocyanate groups in proper quantities. When the equivalent ratio (imino groups and the like/isocyanate groups) is 0.2 or more, a reaction between the melamine resin (B) and the hydrophilic polyisocyanate compound (D) easily occurs. When the equivalent ratio (imino groups and the like/isocyanate groups) is 1.1 or less, the number of imino groups and methylol groups is not excessively larger than the number of groups that react with isocyanate groups in proper quantities, so that a reaction between the hydrophilic polyisocyanate compound (D) and the hydroxy group-containing resin (A) also easily occurs.

The equivalent ratio (imino groups and the like/isocyanate groups) may be 0.3 or more, or 0.38 or more. The equivalent ratio (imino groups and the like/isocyanate groups) may be 1.0 or less, or 0.9 or less.

Since imino groups or methylol groups react with isocyanate groups at a ratio of 1:1, the equivalent ratio (imino groups and the like/isocyanate groups) can be obtained as the number ratio (Tm/Ti) of the total number Tm of the imino groups and the methylol groups in the melamine resin (B) contained in the coating composition to the total number Ti of the isocyanate groups in the hydrophilic polyisocyanate compound (D) contained in the coating composition.

For example, the total number Tm of imino groups and the like contained in 100 g of the coating composition is calculated on the basis of the following formula from the mass (blending amount) of the melamine resin (B) contained in 100 g of the coating composition Wm, the molecular weight Mm, and the total number Nm of imino groups and methylol groups per molecule.

Total number Tm (/100 g) = total number of imino groups and the like Nm x (blending amount Wm/molecular weight Mm)

Similarly, the total number Ti is calculated on the basis of the following formula from the mass (blending amount) Wi of the hydrophilic polyisocyanate compound (D) contained in 100 g of the coating composition, the molecular weight Mi, and the number Ni of isocyanate groups per molecule (alternatively, the NCO content Ri (%)).

Total number Ti (/100 g) = number of isocyanate groups Ni $\times$ (blending amount Wi/molecular weight Mi), or

Total number Ti (/100 g) = blending amount Wi x NCO content Ri/(NCO molecular weight = 42)

<<Solvent>>

The first part includes water as a solvent. The first part may further include an organic solvent soluble in water or miscible in water, as necessary.

<<Preparation method>>

The first part can be prepared by mixing the components described above by a method known to those skilled in the art. Examples of the mixing method include the same method as that used in the preparation of the water-borne coating composition.

(Second part)

The second part includes a hydrophilic polyisocyanate compound (D). The hydrophilic polyisocyanate compound (D) is a curing agent, and reacts with a hydroxy group-containing component (typically, the hydroxy group-containing resin (A)) to form a crosslinked structure, thereby curing the water-borne coating composition. The hydrophilic polyisocyanate compound (D) further reacts with the melamine resin (B). As a result, rigid triazine rings of the melamine resin (B) are incorporated into the crosslinked structure of the hydroxy group-containing resin (A) and the hydrophilic polyisocyanate compound (D), so that the hardness of a resulting coating film is increased.

The equivalent ratio (NCO/OH) of the isocyanate groups contained in the hydrophilic polyisocyanate compound (D) to the hydroxy groups contained in the hydroxy group-containing component is, for example, 0.7 or more and 2.0 or less. The equivalent ratio (NCO/OH) may be 0.7 or more, or 0.8 or more. The equivalent ratio (NCO/OH) may be 2.0 or less, 1.8 or less, or 1.5 or less.

As the hydrophilic polyisocyanate compound (D), at least one of an ionically modified polyisocyanate compound (D1) and a nonionically modified polyisocyanate compound (D2) each having an unblocked free isocyanate group is used. These are dispersible in water. At least the ionically modified polyisocyanate compound (D1) may be used.

(D1) Ionically modified polyisocyanate compound

The ionically modified polyisocyanate compound (D1) has two or more isocyanate groups in the molecule. Since the ionically modified polyisocyanate compound (D1) has an unblocked free isocyanate group, low-temperature curing is possible. The ionically modified polyisocyanate compound (D1) also has an ionic group, which is a hydrophilic group. Therefore, the ionically modified polyisocyanate compound (D1) is well dispersed when mixed with the first part, which is aqueous, and the smoothness of a coating film is improved.

An anionically modified polyisocyanate compound may be included as the ionically modified polyisocyanate compound (D1). The anionically modified polyisocyanate compound is obtained, for example, by modifying a polyisocyanate compound disclosed as an example of an organic polyisocyanate compound (b1) with an anionic hydrophilic group. The modification with an anionic hydrophilic group is performed such that two or more isocyanate groups remain in one molecule.

The anionic hydrophilic group is derived from, for example, a carboxylic acid, a sulfonic acid, phosphoric acid, silicic acid, a sulfuric acid ester, a phosphoric acid ester, a metal salt or an organic salt thereof. Among them, the anionic hydrophilic group may be an anionic hydrophilic group derived from a sulfonic acid.

(D2) Nonionically modified polyisocyanate compound

The nonionically modified polyisocyanate compound (D2) has two or more isocyanate groups in the molecule. Since the nonionically modified polyisocyanate compound (D2) also has an unblocked free isocyanate group, low-temperature curing is possible. In addition, the nonionically modified polyisocyanate compound (D2) has a nonionic hydrophilic group. Thus, the nonionically modified polyisocyanate compound (D2) is well dispersed when mixed with the first part, which is aqueous, and the smoothness of a coating film is improved.

The nonionic hydrophilic group is derived from a hydrophilic compound. The nonionically modified polyisocyanate compound (D2) is obtained, for example, by modifying a polyisocyanate compound disclosed as an example of an organic polyisocyanate compound (b1) with a hydrophilic compound.

Examples of the hydrophilic compound include a hydrophilic polyol and a hydrophilic polyether. Examples of the hydrophilic polyol include ethylene glycol, glycerol, trimethylolpropane, pentaerythritol, and sorbitol.

<<Other polyisocyanate compounds>>

The use of a non-hydrophilic polyisocyanate compound is not excluded. However, from the viewpoint of viscosity, it is desirable that the use amount is small. For example, the use amount of the non-hydrophilic polyisocyanate compound accounting for in 100% by mass of the total solid content of the polyisocyanate compound included in the second part may be 50% by mass or less, 30% by mass or less, or 0% by mass.

The use of a blocked polyisocyanate compounds in which isocyanate groups are capped with a blocking agent is not excluded. However, from the viewpoint of curability under a low temperature, it is desirable that the use amount is extremely small. The amount of the blocked polyisocyanate compound used may be 1% by mass or less, and may be 0% by mass.

<<Other curing agents>>

The water-borne coating composition may include a curing agent other than the hydrophilic polyisocyanate compound (D). Examples of such other curing agent include epoxy compounds, aziridine compounds, carbodiimide compounds, and oxazoline compounds. These are used singly or two or more of them are used in combination. The content of the other curing agent is appropriately set according to the hydroxy group-containing resin.

<<Solvent>>

The second part may include a solvent having no hydroxy group. Examples of such a solvent include glycol ether-based organic solvents; acetate-based organic solvents; ketone-based organic solvents; and ester-based organic solvents. These are used singly or two or more of them are used in combination.

<<Preparation method>>

The second part can be prepared by mixing the components described above by a method known to those skilled in the art. Examples of the mixing method include the same methods as those for the preparation of the first part.

(Other components)

The water-borne coating composition may include a pigment and an additive commonly used in the coating material field. The additives may be added to any of the first part, the second part, and the third package. Examples of the pigment include a coloring pigment, an extender pigment, and an anti-corrosive pigment. Examples of the additive include an ultraviolet absorber, a hindered amine light stabilizer, an antioxidant, crosslinked resin particles, a leveling agent, an antifoaming agent, a curing accelerator, and a viscosity modifier.

[Coated article]

A coated article is obtained using the water-borne coating composition according to the present disclosure. The coated article has a coating film having high hardness, being superior in glossy texture, and having reduced spray dust.

In one embodiment, a coated article includes an article to be coated and a multilayer coating film in which a first coating film and a clear coating film are laminated in this order. The first coating film is formed from the water-borne coating composition according to the present disclosure.

In another embodiment, a coated article includes an article to be coated, and a multilayer coating film in which a first coating film, a second coating film, and a clear coating film are laminated in this order. The first coating film is formed from the water-borne coating composition according to the present disclosure.

(Article to be coated)

Examples of the material of the article to be coated include metal, resin, and glass. Examples of the article to be coated specifically include automobile bodies such as passenger cars, trucks, motorcycles, and buses, parts for automobile bodies, and automobile parts such as spoilers, bumpers, mirror covers, grilles, and door knobs.

Examples of the metal include iron, copper, aluminum, tin, zinc, and alloys thereof (e.g., steel). Examples of a usable metallic article to be coated typically include steel sheets such as cold-rolled steel sheets, hot-rolled steel sheets, stainless steels, electrogalvanized steel sheets, hot-dip galvanized steel sheets, zinc-aluminum alloy-based plated steel sheets, zinc-iron alloy-based plated steel sheets, zinc-magnesium alloy-based plated steel sheets, zinc-aluminum-magnesium alloy-based plated steel sheets, aluminum-based plated steel sheets, aluminum-silicon alloy-based steel

sheets, and tin-based plated steel sheets.

The metallic article to be coated may have been subjected to surface treatment. Examples of the surface treatment include phosphate salt treatment, chromate treatment, zirconium chemical conversion treatment, and composite oxide treatment. The metallic article to be coated may have been further coated with an electrodeposition coating material after the surface treatment. The electrodeposition coating material may be of a cationic type or of an anionic type.

Examples of the resin include polyethylene resin, EVA resin, polyolefin resins (polyethylene resin, polypropylene resin, etc.), vinyl chloride resin, styrol resin, polyester resins (including PET resin, PBT resin, etc.), polycarbonate resin, acrylic resin, acrylonitrile-butadiene-styrene (ABS) resin, acrylonitrile-styrene (AS) resin, polyamide resin, acetal resin, phenol resin, fluororesin, melamine resin, urethane resin, epoxy resin, and polyphenylene oxide (PPO). The resin article to be coated may have been subjected to degreasing treatment.

Since the water-borne coating composition according to the present disclosure can be cured at a low temperature, it is suitable for application to a resin. A coating film obtained using the water-borne coating composition according to the present disclosure is superior in chipping resistance, and therefore is suitable for application to a metal. The article to be coated may include both a metal portion (portion formed of metal) and a resin portion (portion formed of resin). The metal portion may be a steel plate.

(First coating film)

The first coating film is formed from the water-borne coating composition according to the present disclosure. The film thickness (dry film thickness) of the first coating film after curing is, for example, 5 μm or more and 80 μm or less. The dry film thickness of the first coating film may be 7 μm or more. The dry film thickness of the first coating film may be 50 μm or less.

The thickness of the coating film can be measured with an electro-magnetic coating thickness meter (for example, SDM-miniR manufactured by SANKO). The thickness of a coating film is an average value of the thicknesses of the coating film at arbitrary five points.

(Second coating film)

The second coating film is formed of the second coating composition. The second coating composition will be described later. The second coating film may be a single layer or a laminated coating film of two or more layers. The dry film thickness per layer of the second coating film is, for example, 5 μm or more and 35 μm or less. The dry film thickness per layer of the second coating film may be 7 μm or more. The dry film thickness per layer of the second coating film may be 30 μm or less.

(Clear coating film)

The clear coating film is formed from a clear coating composition. The clear coating composition will be described later. The dry film thickness of the clear coating film is, for example, 10 μm or more and 80 μm or less. The dry film thickness of the clear coating film may be 20 μm or more. The dry film thickness of the clear coating film may be 60 μm or less.

[Method for producing coated article]

In one embodiment, a coated article is manufactured by a method including forming an uncured first coating film by applying the water-borne multi-pack type coating composition described above onto an article to be coated; forming an uncured clear coating film by applying a clear coating composition onto the uncured first coating film; and curing the uncured first coating film and the uncured clear coating film by heating at 70°C or more and 110°C or less.

In another embodiment, a coated article is manufactured by a method including forming an uncured first coating film by applying the water-borne coating composition described above onto an article to be coated; forming an uncured second coating film by applying a second water-borne coating composition onto the uncured first coating film, forming an uncured clear coating film by applying a clear coating composition onto the uncured second coating film; and curing the uncured first coating film, the uncured second coating film, and the uncured clear coating film by heating at 70°C or more and 110°C or less.

Even at a low temperature of 70°C or more and 110°C or less, a coating film having high hardness, being superior in glossy texture, and having reduced spray dust is formed.

Hereinafter, description is made by taking as an example a method of producing a coated article including a multilayer coating film in which a first coating film, a second coating film, and a clear coating film are laminated in this order.

(I) Forming uncured first coating film

An uncured first coating film is formed by applying the water-borne coating composition according to the present disclosure is applied onto an article to be coated. The first coating film improves adhesion between the second coating film and the article to be coated. In addition, the coated surface is made uniform by the first coating film, so that unevenness of the second coating film is easily suppressed. As described above, the article to be coated may include both a metal portion and a resin portion.

Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (μμ bell)", "micro bell (μ bell)", "metallic bell", or the like is used.

Preliminary drying (also referred to as preheating) may be carried out after applying the water-borne coating composition and before applying the second coating composition. As a result, the solvent contained in the water-borne coating composition is inhibited from popping in the curing, so that the occurrence of bubbles is easily controlled. Further, the preliminary drying inhibits the mixing of the uncured fist coating film and the second coating composition, so that a mixed layer is hardly formed. Therefore, the smoothness of a resulting coated article can be further improved.

Examples of the preliminary drying include a method in which the item to be dried is left standing for 5 minutes or more and 15 minutes or less under a temperature condition of 20°C or higher and 25°C or lower, and a method in which the item to be dried is heated for 30 seconds or more and 10 minutes or less under a temperature condition of 50°C or higher and 80°C or lower.

(II) Forming uncured second coating film

The second coating composition is applied onto the uncured first coating film to form an uncured second coating film. Two or more layers of the uncured second coating films can be formed by applying the same second coating composition or different second coating compositions twice or more. An interval of several minutes may be provided between the nth application of the second coating composition and the (n + 1)th application of the second coating composition

Examples of the applying method include the same methods as the methods of applying the water-borne coating composition. After applying the second coating composition, preliminary drying may be carried out in the same manner as described above.

(Second coating composition)

The second coating composition may be either aqueous or solvent-based. The second coating composition may be aqueous. The water-borne second coating composition includes, for example, an acrylic resin emulsion, a water-soluble acrylic resin, a curing agent (typically, a melamine resin), or a polyether polyol resin. The second coating composition may further include the above-described various pigments, a luster pigment, and various additives.

(III) Forming uncured clear coating film

A clear coating composition is applied onto the uncured second coating film to form an uncured clear coating film.

The applying method is not particularly limited. Examples of the applying method include the same methods as the methods of applying the water-borne coating composition. Among them, rotary atomization type electrostatic application is preferable from the viewpoint of coating efficiency. After applying the clear coating composition, preliminary drying may be carried out in the same manner as described above.

(Clear coating composition)

The clear coating composition may be a solvent-based composition, may be an aqueous composition, and may be a powder type composition. In view of transparency, resistance to acid etching, and so on, the solvent-based clear coating composition may include an acrylic resin and/or a polyester resin as a coating film forming resin and an amino resin and/or an isocyanate as a curing agent. The solvent-based clear coating composition may also include an acrylic resin and/or a polyester resin having a carboxylic acid and/or an epoxy group. The clear coating composition may include the above-described various pigments and additives as long as the transparency is not impaired.

(IV) Curing

The respective uncured coating films are cured. Each coating film can be cured by heating. In the present embodiment, the first coating film, the second coating film, and the clear coating film are cured at once.
The heating temperature is, for example, 70°C or more and 110°C or less. The heating temperature may be 75°C or more, or 80°C or more. The heating temperature may be 105°C or less, 100°C or less, 95°C or less, or 90°C or less. The heating time means a time during which the temperature in a heating device reaches a target temperature and the article to be coated is maintained at the target temperature, and the time taken until the temperature reaches the target temperature is not considered. Examples of the heating device include a drying furnace using a heating source such as hot air, electricity, gas, or infrared rays.
The heating time may be appropriately set according to the heating temperature. When the heating temperature is 70°C or more and 110°C or less, the heating time is, for example, 10 minutes or more and 60 minutes or less, and may be 15 minutes or more and 45 minutes or less.

2. Second Embodiment

The second embodiment is different from the first embodiment in that the first part includes a polyurethane resin (C) together with the hydroxy group-containing resin (A) and the melamine resin (B). This differential configuration will be described below. Since the other configurations of the second embodiment are the same as those of the first embodiment, the description thereof will be omitted. In the second embodiment, since the configuration of the coated article and the method for producing the coated article are the same as those in the first embodiment, the description thereof will be omitted.

(C) Polyurethane resin

The polyurethane resin (C) is also a coating film forming component. The polyurethane resin (C) increases the elasticity of a coating film and improves the chipping resistance.
The polyurethane resin (C) may have a hydroxyl value of 30 mg KOH/g or less. As a result, the viscosity of the water-borne coating composition can be kept low. Therefore, the spray dust is further reduced, and the glossy texture is further improved. Furthermore, the reaction between the polyurethane resin (C) and the hydrophilic polyisocyanate compound (D) is suppressed, so that the progress of the reaction between the hydroxy group-containing resin (A) and the hydrophilic polyisocyanate compound (D) is easily controlled. The hydroxyl value of the polyurethane resin (C) may be 20 mg KOH/g or less, 10 mg KOH/g or less, or 0 mg KOH/g.
In one embodiment, the solid content of the polyurethane resin (C) may be 10 parts by mass or more and 110 parts by mass or less per 100 parts by mass of the solid component of the hydroxy group-containing resin (A). As a result, the hardness and the elasticity of a resulting coating film are well balanced, and a coating film having chipping resistance and good coating film strength is easily obtained. The solid content of the polyurethane resin (C) may be 15 parts by mass or more, and may be 20 parts by mass or more. The solid content of the polyurethane resin (C) may be 105 parts by mass or less, and may be 50 parts by mass or less.
In the first part, the polyurethane resin (C) may be dissolved. That is, the polyurethane resin (C) may be a water-soluble polyurethane resin. In the first part, the form of the polyurethane resin (C) may be dispersion.
The water-soluble polyurethane resin and the polyurethane resin dispersion are obtained, for example, by a method of forcibly emulsifying a polyurethane resin using a surfactant, or a method of neutralizing a polyurethane resin with a base or an acid.
The polyurethane resin is obtained by, for example, a reaction of a polyol compound, a compound having an active hydrogen group and a hydrophilic group in the molecule, an organic polyisocyanate compound (b1), and, as necessary, a chain extender and a polymerization terminator. As necessary, a chain extender and a polymerization terminator may be used.
The polyol compound contains two or more hydroxy groups in the molecule. Examples of the polyol compound include polyhydric alcohols such as ethylene glycol, propylene glycol, 1,4-butanediol, 1,6-hexanediol, trimethylolpropane, and glycerol; polyether polyols such as polyethylene glycol, polypropylene glycol, and polytetramethylene ether glycol; polyester polyols obtained from a dicarboxylic acid such as adipic acid, sebacic acid, itaconic acid, maleic anhydride, phthalic acid, and isophthalic acid, and a glycol such as ethylene glycol, triethylene glycol, propylene glycol, butylene glycol, tripropylene glycol, and neopentyl glycol; polycaprolactone polyol; polybutadiene polyol; polycarbonate polyol; and polythioether polyol. These are used singly or two or more of them are used in combination.
Examples of the compound having an active hydrogen group and a hydrophilic group in the molecule include a compound containing active hydrogen and an anionic group, a cationic group, or a nonionic hydrophilic group. The anion group includes an anion group and an anion forming group. The anion forming group is a group capable of reacting with a

base to form an anion group, and specifically, an anion group is formed from the anion forming group via neutralization with a base before, during, or after the urethanization reaction.

Examples of the compound containing active hydrogen and an anion group are described in JP S42-24192 B and JP S55-41607 B, and specific examples thereof include α,α-dimethylolpropionic acid and α,α-dimethylolbutyric acid. The compound having active hydrogen and a cationic group is described in, for example, JP S43-9076 B. Examples of the compound having active hydrogen and a nonionic hydrophilic group are described in JP S48-41718 B, and specific examples thereof include polyethylene glycol and an alkyl alcohol alkylene oxide adduct.

Examples of the organic polyisocyanate compound (b1) include aromatic polyisocyanates, aliphatic polyisocyanates, alicyclic polyisocyanates, and araliphatic polyisocyanates.

The aromatic polyisocyanate has two or more isocyanate groups bonded to carbon atoms constituting an aromatic ring. Examples of the aromatic polyisocyanate include aromatic diisocyanates such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylene diisocyanate or a mixture thereof, 4,4'-toluidine diisocyanate, and 4,4'-diphenyl ether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate. These are used singly or two or more of them are used in combination.

The aliphatic polyisocyanate has no aromatic ring and has two or more isocyanate groups bonded to carbon atoms constituting a linear or branched aliphatic hydrocarbon group. Examples of the aliphatic polyisocyanate include aliphatic diisocyanates such as ethylene diisocyanate, trimethylene diisocyanate, 1,2-propylene diisocyanate, butylene diisocyanates (tetramethylene diisocyanate, 1,2-butylene diisocyanate, 2,3-butylene diisocyanate, and 1,3-butylene diisocyanate), 1,5-pentamethylene diisocyanate (PDI), 1,6-hexamethylene diisocyanate (HDI), 2,4,4- or 2,2,4-trimethylhexamethylene diisocyanate, heptamethylene diisocyanate, octamethylene diisocyanate, and dodecamethylene diisocyanate; and aliphatic triisocyanates such as lysine ester triisocyanate, 1,4,8-triisocyanatooctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These are used singly or two or more of them are used in combination.

The alicyclic polyisocyanate has no aromatic ring and has two or more isocyanate groups bonded to carbon atoms constituting a cyclic aliphatic hydrocarbon group. Examples of the alicyclic polyisocyanate include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or a mixture thereof, and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo[2.2.1]heptane, 2-(3-isocyanatopropyl)-2,6-di(isocyanatomethyl)-bicyclo[2.2.1]heptane, 3-(3-isocyanatopropyl)-2,5-di(isocyanatomethyl)-bicyclo[2.2.1]heptane, 5-(2-isocyanatoethyl)-2-isocyanatomethyl-3-(3-isocyanatopropyl)-bicyclo[2.2.1]heptane, 6-(2-isocyanatoethyl)-2-isocyanatomethyl-3-(3-isocyanatopropyl)-bicyclo[2.2.1]heptane, 5-(2-isocyanatoethyl)-2-isocyanatomethyl-2-(3-isocyanatopropyl)-bicyclo[2.2.1]-heptane, and 6-(2-isocyanatoethyl)-2-isocyanatomethyl-2-(3-isocyanatopropyl)-bicyclo[2.2.1]heptane. These are used singly or two or more of them are used in combination.

The araliphatic polyisocyanate has an aromatic ring and has two or more isocyanate groups bonded to carbon atoms constituting an aliphatic hydrocarbon group. Examples of the araliphatic polyisocyanate include araliphatic diisocyanates such as 1,3- or 1,4-xylylene diisocyanate or a mixture thereof, ω,ω'-diisocyanato-1,4-diethylbenzene, 1,3- or 1,4-bis(1-isocyanato-1-methylethyl)benzene (common name: tetramethylxylylene diisocyanate) or a mixture thereof; and araliphatic triisocyanates such as 1,3,5-triisocyanatomethylbenzene. These are used singly or two or more of them are used in combination.

The organic polyisocyanate compound (b1) may be a derivative of any of the polyisocyanates described above. Examples of the derivative of polyisocyanate include a dimer, a trimer, biuret, allophanate, uretdione, uretimine, isocyanurate, oxadiazinetrione, polymethylene polyphenyl polyisocyanate (crude MDI, polymeric MDI), and crude TDI.

The chain extender contains two or more active hydrogen groups in the molecule. Examples of the chain extender include low molecular weight polyols such as ethylene glycol, propylene glycol, 1,4-butanediol, 3-methylpentanediol, 2-ethyl-1,3-hexanediol, and trimethylolpropane; polyamines such as ethylenediamine, hexamethylenediamine, diethylenetriamine, hydrazine, xylylenediamine, and isophoronediamine; and water. These are used singly or two or more of them are used in combination.

Examples of the polymerization terminator include a compound having one active hydrogen in the molecule (for example, monoalcohols and monoamines), and monoisocyanate compounds.

The method for synthesizing the polyurethane resin may be a one-shot method in which the components are reacted at once, or may be a multi-stage method in which the components are reacted stepwise. In the multi-stage method, a part of an active hydrogen-containing compound (for example, a polymeric polyol) is reacted with the organic polyisocyanate compound (b1) to form an NCO-terminated prepolymer, and then the prepolymer is reacted with the

rest of the active hydrogen-containing compound.

In the present embodiment, the solid content of the melamine resin (B) may be 7 parts by mass or more and 50 parts by mass or less per 100 parts by mass of the total solid content of the hydroxy group-containing resin (A) and the polyurethane resin (C). As a result, the curing reaction easily proceeds, and coating film physical properties such as hardness and flexibility to metal thermal expansion are easily improved. The solid content of the melamine resin (B) in the present embodiment may be 15 parts by mass or more, 17 parts by mass or more, or 20 parts by mass or more. The solid content of the melamine resin (B) in the present embodiment may be 45 parts by mass or less, 40 parts by mass or less, or 35 parts by mass or less. In particular, the solid content of the melamine resin (B) per 100 parts by mass of the total solid content of the hydroxy group-containing resin (A) and the polyurethane resin (C) may be 7 parts by mass or more and 40 parts by mass or less.

Examples

The present invention will be described hereafter in more detail by way of examples, to which the present invention is not intended to be limited. In the examples, "parts" and "%" are on a solid content basis unless otherwise indicated.

The acid value and the hydroxyl value were calculated on the basis of the solid acid value and the solid hydroxyl value of the monomer mixture used.

[Production Example 1-1]

Production of hydroxy group-containing acrylic resin (A1-1)

126.5 parts of deionized water was added to a reaction vessel, and was heated to 80°C while being mixed and stirred in a nitrogen stream. Subsequently, a monomer emulsion composed of 30 parts of a monomer mixture (including 6.98 parts of ethyl acrylate, 12.42 parts of butyl acrylate, 4.75 parts of styrene, 2.78 parts of 2-hydroxyethyl methacrylate, and 3.07 parts of methacrylic acid), 0.33 parts of ADEKA REASOAP SR-10 (polyoxyethylene-1-alkoxymethyl-2-(2-propenyloxy)ethyl ether sulfate ammonium salt, manufactured by ADEKA CORPORATION), and 24 parts of deionized water and an initiator solution composed of 0.09 parts of ammonium persulfate and 3 parts of deionized water were dropped in parallel into the reaction vessel over 1.5 hours. After the completion of the dropping, aging was carried out at that temperature for 1 hour.

Subsequently, a monomer emulsion composed of 70 parts of a monomer mixture (including 16.28 parts of ethyl acrylate, 28.97 parts of butyl acrylate, 15.25 parts of styrene, 6.5 parts of 2-hydroxyethyl methacrylate, and 3 parts of allyl methacrylate), 0.77 parts of ADEKA REASOAP SR-10, and 56 parts of deionized water and an initiator solution composed of 0.21 parts of ammonium persulfate and 7 parts of deionized water were dropped in parallel into the reaction vessel over 1.5 hours. After the completion of the dropping, aging was carried out at that temperature for 1 hour.

Thereafter, the mixture was cooled to 40°C and was filtered through a 400 mesh filter. 20 parts of deionized water and 0.32 parts of dimethylaminoethanol were added to the filtrate to adjust the pH to 6.5. Thereby, an emulsion of a hydroxy group-containing acrylic resin (A1-1) having a core-shell type multilayer structure having an average particle size of 100 nm, a Tg of 27°C, a nonvolatile component content of 30%, an acid value of 20 mg KOH/g, and a hydroxyl value of 40 mg KOH/g was obtained.

[Production Example 1-2]

Production of hydroxy group-containing acrylic resin (A1-2)

126.5 parts of deionized water was added to a reaction vessel, and was heated to 80°C while being mixed and stirred in a nitrogen stream. Subsequently, a monomer emulsion composed of 100 parts of a monomer mixture (including 27.61 parts of methyl acrylate, 53.04 parts of ethyl acrylate, 4.00 parts of styrene, 9.28 parts of 2-hydroxyethyl methacrylate, 3.07 parts of methacrylic acid, and 3.00 parts of allyl methacrylate), 1.1 parts of ADEKA REASOAP SR-10, and 80 parts of deionized water and an initiator solution composed of 0.3 parts of ammonium persulfate and 10 parts of deionized water were dropped in parallel into the reaction vessel over 2 hours. After the completion of the dropping, aging was carried out at that temperature for 2 hours.

Thereafter, the mixture was cooled to 40°C and was filtered through a 400 mesh filter. 20 parts of deionized water and 0.32 parts of dimethylaminoethanol were added to the filtrate to adjust the pH to 6.5. Thereby, an emulsion of a single layer type hydroxy group-containing acrylic resin (A1-2) having an average particle size of 90 nm, a Tg of -9.5°C, a nonvolatile component content of 30%, an acid value of 20 mg KOH/g, and a hydroxyl value of 40 mg KOH/g was obtained.

[Production Example 1-3]

Production of hydroxy group-containing acrylic resin (A1-3)

23.89 parts of tripropylene glycol methyl ether and 16.11 parts of propylene glycol methyl ether were added to a reaction vessel, and the temperature was raised to 105°C while mixing and stirring in a nitrogen stream. Subsequently, a monomer mixture of 13.1 parts of methyl methacrylate, 68.4 parts of ethyl acrylate, 11.6 parts of 2-hydroxyethyl methacrylate, and 6.9 parts of methacrylic acid was prepared, and 100 parts of the monomer mixture and an initiator solution composed of 10.0 parts of tripropylene glycol methyl ether and 1 part of tert-butyl peroxy-2-ethylhexanoate were dropped in parallel into the reaction vessel over 3 hours. After the completion of the dropping, aging was carried out at that temperature for 0.5 hours.

Furthermore, an initiator solution composed of 5.0 parts of tripropylene glycol methyl ether and 0.3 parts of tert-butyl peroxy-2-ethylhexanoate was dropped into the reaction vessel over 0.5 hours. After the completion of the dropping, aging was carried out at that temperature for 2 hours.

Subsequently, 16.1 parts of the solvent was distilled off at 110°C under reduced pressure (70 torr) with a desolvating apparatus, and then, 204 parts of deionized water and 7.1 parts of dimethylaminoethanol were added. Thereby, a hydroxy group-containing water-soluble acrylic resin solution (A1-3) having a nonvolatile component content of 30%, an acid value of 40 mg KOH/g, a hydroxyl value of 50 mg KOH/g, a Tg of 10°C, and an Mw of 30,000 was obtained.

[Production Example 2]

Production of hydroxy group-containing polyester (A2)

A reaction vessel equipped with a stirrer, a nitrogen inlet tube, a temperature controller, a condenser, and a decanter was charged with 250 parts of trimethylolpropane, 824 parts of adipic acid, and 635 parts of cyclohexanedicarboxylic acid, then the mixture was heated to 180°C, and then a condensation reaction was carried out until no more water distilled out. After cooling to 60°C, 120 parts of phthalic anhydride was added. Subsequently, the temperature was raised to 140°C and this temperature was maintained for 60 minutes, affording a polyester resin having a number average molecular weight of 2,000 as measured by GPC. 59 parts of dimethylaminoethanol (corresponding to 80% of the acid value of the resin (neutralization ratio: 80%)) was added at 80°C, and 1920 parts of deionized water was further added, followed by stirring, and thus an aqueous polyester dispersion having a solid content of 45% by mass was obtained. The hydroxy group-containing polyester resin (A2) contained in this aqueous polyester dispersion had a hydroxyl value of 110 mg KOH/g, an acid value of 15 mg KOH/g, a Tg of -14°C, and an Mw of 7,000.

[Preparation of pigment dispersion paste]

A dispersant "Disperbyk 190" (produced by BYK-Chemie GmbH) (9.2 parts), 17.8 parts of ion-exchanged water, and 73.0 parts of rutile type titanium dioxide were preliminarily mixed. Thereafter, the mixture was mixed and dispersed in a paint conditioner using a bead medium at room temperature until the particle size reached 5 μm or less. Finally, the bead medium was removed by filtration, affording a coloring pigment paste.

Details of the melamine resin (B), the polyurethane resin (C) and the hydrophilic polyisocyanate compound (D) used are as follows.

[Melamine resin (B)]

Melamine resins (B-1) to (B-7) and (b-1) to (b-3) having the following average number of functional groups, average particle size, and number average molecular weight were used. Details are shown in Table 2.

The average particle size of the melamine resin (B) was measured using n-butanol or isobutanol and using a liquid material of the melamine resin (B) having concentration of 70%. The volume-based particle size distribution of the liquid material was measured using a laser diffraction/scattering type particle size distribution analyzer (Microtrac UPA150, manufactured by Nikkiso Co., Ltd.), and the 50% average particle size (D50) in the particle size distribution was defined as the average particle size of the melamine resin (B). The effective measurement range of the Microtrac UPA150 is 0.003 μm to 6.5 μm. In Table 2, D50 of less than 0.003 μm indicates that D50 was less than the effective measurement range of the analyzer.

[Table 2]

| Melamine resin (B) | Number of functional groups/triazine ring | | | D50/um | D50 Measuring solvent | Mn | SP | Color scale |
|---|---|---|---|---|---|---|---|---|
| | Methylol group | Imino group | Average number of functional groups | | | | | |
| B-1 | 1.0 | 2.1 | 3.1 | Less than 0.003 um | n-Butanol | 500 | 14.2 | 1 |
| B-2 | 0.8 | 2.0 | 2.8 | 0.005 | n-Butanol | 800 | 11.4 | 1 |
| B-3 | 0.3 | 1.8 | 2.1 | 0.008 | n-Butanol | 700 | 11.9 | 1 |
| B-4 | 0.2 | 1.5 | 1.7 | 0.004 | Isobutanol | 500 | 12.4 | 1 |
| B-5 | 0.3 | 1.4 | 1.6 | 0.020 | n-Butanol | 1500 | 10.4 | 1 |
| B-6 | 1.1 | 0.4 | 1.6 | 0.005 | Isobutanol | 600 | 12.8 | 1 |
| B-7 | 1.3 | 0.0 | 1.3 | Less than 0.003 um | n-Butanol | 500 | 12.4 | 1 |
| b-1 | 0.9 | 0.1 | 1.0 | Less than 0.003 um | n-Butanol | 900 | 9.5 | 1 |
| b-2 | 0.2 | 0.1 | 0.3 | Less than 0.003 um | n-Butanol | 500 | 13.5 | 1 |
| b-3 | | | | 2 um | n-Butanol | | | |

[Polyurethane resin (C)]

(C-1): N800T, manufactured by Sanyo Chemical Industries, Ltd., hydroxyl value: 0 mg KOH/g

(C-2): Bayhydrol UH2648/1, manufactured by Covestro AG, aqueous polyurethane resin, hydroxyl value: 0 mg KOH/g

(C-3): Bayhydrol U2787, manufactured by Covestro AG, aqueous polyurethane resin, hydroxyl value: 56 mg KOH/g

[Ionically (anionically) modified polyisocyanate compound (D1)]

(D1): Bayhydur 2655, manufactured by Sumika Covestro Urethane Co., Ltd., sulfonic acid group-containing

[Nonionically modified polyisocyanate compound (D2)]

(D2): Bayhydur 304, manufactured by Sumika Covestro Urethane Co., Ltd., hydrophilic polyether-modified HDI trimer

[Blocked polyisocyanate compound]

(dl): Duranate WM44-L70G, manufactured by Asahi Kasei Corporation, HDI-based blocked isocyanate

[Non-hydrophilic polyisocyanate compound]

(d2): Sumidur N 3300, manufactured by Sumika Covestro Urethane Co., Ltd., uretdione body of hexamethylene diisocyanate

Examples 1 to 12 corresponding to the first embodiment were performed.

[Example 1]

(1) Preparation of first part

Into a vessel equipped with a stirrer were charged 35 parts of the hydroxy group-containing acrylic resin (A1-1),

10 parts of the hydroxy group-containing polyester resin (A2), 10 parts of the melamine resin (B-1), 122.87 parts of a coloring pigment paste, and 25 parts of ion-exchanged water, and the PH was adjusted to 8.0 with 0.01 parts of dimethylethanolamine (manufactured by Kishida Chemical Co., Ltd.). Furthermore, 1.0 parts of ADEKA NOL UH-814N (urethane association type thickening agent, 30% active component, manufactured by Asahi Denka Co., Ltd., trade name) was mixed and stirred. Thereafter, TIPAQUE CR-97 (titanium dioxide manufactured by Ishihara Sangyo Kaisha, Ltd., average primary particle size: 200 nm) was added such that a PWC of 53.5% was attained, and dispersed. Thus, a first part was obtained.

(2) Preparation of second part

45 parts of the anionically modified polyisocyanate compound (D1) and an appropriate amount of a solvent (dipropylene glycol dimethyl ether and/or ethylene glycol monobutyl acetate) were mixed, and the mixture was sufficiently stirred with a disper, affording a second part.

(3) Preparation of water-borne coating composition

The first part and the second part were mixed, affording a water-borne coating composition.

(4) Preparation of article to be coated

(Metal article to be coated)

A satin-finished steel plate (400 mm × 600 mm) was used as a material to be coated. Cleaning and zinc phosphate treatment were performed in accordance with a conventional method. Next, electrodeposition coating was performed using a cationic electrodeposition coating material (Power Top U-100 manufactured by Nippon Paint Co., Ltd.). Subsequently, drying treatment was performed under the condition of 170°C × 20 minutes, affording a metal article to be coated having an electrodeposition coating film having a thickness of 15 μm.

(Resin article to be coated)

A polypropylene plate was degreased, affording a resin article to be coated.

(5) Preparation of coated article having multilayer coating film

A water-borne multi-pack type coating composition was electrostatically applied to each of the metal article to be coated and the resin article to be coated using a rotary atomization type electrostatic applicator such that a dry film thickness of 15 μm would be attained, and then left standing for 5 minutes.

Subsequently, an aqueous base coating composition (Aqueous Base AR-3020-1 (gray-metallic) manufactured by Nippon Paint Automotive Coatings Co., Ltd.) was applied using a rotary atomization type electrostatic applicator such that the dry film thickness would be 15 μm, and then preheated at 80°C for 3 minutes.

Subsequently, a clear coating material (Polyure Excel O-1200 (trade name) manufactured by Nippon Paint Automotive Coatings Co., Ltd., polyisocyanate compound-containing two-package acrylic urethane-based organic solvent type clear coating material) was applied using a rotary atomization type electrostatic applicator such that the dry film thickness would be 35 μm.

Thereafter, heating was performed at 80°C for 20 minutes, affording a coated article having a multilayer coating film.

[Examples 2 to 12 and Comparative Examples 1 to 4 and 6]

Water-borne coating compositions were prepared and coated articles were obtained by the same procedure as in Example 1 except that the type and blending amount of the blending components, the solid content at the time of application, and so on were changed as shown in Tables 3 and 4.

[Comparative Example 5]

A water-borne coating composition was prepared by the same procedure as in Example 1 except that the melamine resin (B-1) was added not to the first part but to the second part.

This water-borne coating composition was left at rest at 23°C, and after a lapse of 24 hours, the viscosity of the

coating composition became remarkably high, so that spray coating could not be performed. Therefore, the following evaluations could not be performed.

[Comparative Example 7]

A water-borne coating composition was prepared by the same procedure as in Example 1 except that 10 parts of melamine resin particles (trade name: EPOSTAR MS, manufactured by Nippon Shokubai Co., Ltd.) having an average particle size of 2 μm was added instead of 10 parts of the melamine resin (B-1) in the preparation of the first part.

[Evaluation]

The following evaluations were performed using the water-borne coating compositions prepared in Examples and Comparative Examples described above. In Comparative Example 7, the hardness and the glossy texture were evaluated.

(1) Hardness of monolayer coating film

A water-borne multi-pack type coating composition was electrostatically applied to a glass plate using a rotary atomization type electrostatic applicator such that a dry film thickness of 15 μm would be attained, and then left standing for 5 minutes. Subsequently, heating was performed at 85°C for 20 minutes (keeping time), affording a test plate A for evaluation having a monolayer coating film. The test plate A for evaluation was set in a pendulum hardness tester (manufactured by BYK), the number of swings required for the deflection angle of the König pendulum at 23°C to decrease from 6 degrees to 3 degrees was counted, and evaluation was performed according to the following evaluation criteria.

(Evaluation criteria)

A The number of swings is 80 or more.
B The number of swings is 65 or more and less than 80.
C The number of swings is 50 or more and less than 65.
D The number of swings is 35 or more and less than 50.
E The number of swings is less than 35.

(2) Glossy texture of monolayer coating film

To a metal article to be coated prepared in the same manner as described above was electrostatically applied a water-borne multi-pack type coating composition using a rotary atomization type electrostatic applicator such that a dry film thickness of 15 μm would be attained, and then left standing for 5 minutes. Subsequently, heating was performed at 85°C for 20 minutes (keeping time), affording a test plate B for evaluation having a monolayer coating film.
The gloss value of the test plate B for evaluation was measured in accordance with JIS K 5600-4-7 using "MULTIGLOSS 268 plus" (manufactured by Konica Minolta, Inc.). Specifically, the gloss value of the test plate B for evaluation was measured three times under the geometric condition of an incident optical axis of 60° (60° gloss). The average value of the measured values obtained was calculated and evaluated according to the following criteria.
A The 60° gloss value is 70 or more.
B The 60° gloss value is 60 or more and less than 70.
C The 60° gloss value is 50 or more and less than 60.
D The 60° gloss value is 40 or more and less than 50.
E The 60° gloss value is less than 40.

(3) Spray dust

A water-borne coating composition was applied by air spray application to a metal article to be coated prepared in the same manner as described above under the following conditions, affording a test plate C for evaluation.

(Air spray application conditions)

Discharge: Return 2 turns from fully closed
Air pressure: 0.25 MPa

(Application method)

Application was performed in the following procedure to the metal article to be coated held substantially vertically.

Procedure 1. Apply the water-borne multi-pack type coating composition to the article to be coated such that the dry film thickness will be 15 μm (gun distance: 30 cm).

Procedure 2. Dry at room temperature for 10 minutes.

Procedure 3. Stand diagonally 45° from the article to be coated at a gun distance of 150 cm, and perform dust blowing for 10 seconds.

Procedure 4. Dry at room temperature for 10 seconds.

Procedure 5. Perform Procedure 3 and Procedure 4 five times in total.

Procedure 9. Dry in a jet oven at 60°C for 1 hour.

The coating film of the obtained test plate C for evaluation was visually observed from the upper surface, and the number of spray dusts attached to the test plate (30 cm × 40 cm) was evaluated according to the following criteria. A bulge having a diameter of 100 μm or more was regarded as a spray dust.

5 The number of bulges is less than 10.
4 The number of bulges is 10 or more and less than 30.
3 The number of bulges is 30 or more and less than 100.
2 The number of bulges is 100 or more and less than 200.
1 The number of bulges is 200 or more.

[Table 3]

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Hydroxy group-containing resin (A) | A1-1 | AcEm | 35 | | 35 | 35 | 35 | 35 | 35 | 35 | 35 | 35 | 35 | 35 |
| | Al-2 | AcEm | | 35 | | | | | | | | | | |
| | A1-3 | AcEm | | | | | | | | | | | | |
| | A2 | Hydroxy group-containing polyester | 10 | 10 | 10 | 10 | 10 | 10 | 10 | 10 | 10 | 10 | 10 | 10 |
| Melamine resin (B) | B-1 | Average number of functional groups: 3.1 | 10 | 10 | | | | | | | 10 | 5 | 20 | 10 |
| | B-2 | Average number of functional groups: 2.8 | | | 10 | | | | | | | | | |
| | B-3 | Average number of functional groups: 2.1 | | | | 10 | | | | | | | | |
| | B-4 | Average number of functional groups: 1.7 | | | | | 10 | | | | | | | |
| | B-5 | Average number of functional groups: 1.6 | | | | | | 10 | | | | | | |
| | B-6 | Average number of functional groups: 1.6 | | | | | | | 10 | | | | | |
| | B-7 | Average number of functional groups: 1.3 | | | | | | | | 10 | | | | |
| | b-1 | Average number of functional groups: 1.0 | | | | | | | | | | | | |
| | b-2 | Average number of functional groups: 0.3 | | | | | | | | | | | | |
| | b-3 | Light diffusing melamine resin particles | | | | | | | | | | | | |

(continued)

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Polyisocyanate compound (D) | D1 | Anionically modified | 45 | 45 | 45 | 45 | 45 | 45 | 45 | 45 | | 50 | 35 | 22.5 |
| | D2 | Nonionically modified | | | | | | | | | 45 | | | |
| | d1 | Blocked | | | | | | | | | | | | |
| | d2 | Non-hydrophilic | | | | | | | | | | | | 22.5 |
| Total | | | 100 | 100 | 100 | 100 | 100 | 100 | 100 | 100 | 100 | 100 | 100 | 100 |
| Equivalent ratio (imino groups and the like/isocyanate groups) | | | 0.29 | 0.29 | 0.17 | 0.15 | 0.16 | 0.07 | 0.11 | 0.12 | 0.20 | 0.08 | 0.44 | 0.20 |
| Hardness | | | A | A | A | A | B | C | B | B | B | C | B | B |
| Glossy texture | | | A | A | A | A | A | A | A | A | A | A | A | A |
| Spray dust | | | 5 | 5 | 5 | 5 | 5 | 5 | 5 | 5 | 5 | 5 | 5 | 5 |

[Table 4]

| | | | Comparative Example | | | | | | |
|---|---|---|---|---|---|---|---|---|---|
| | | | 1 | 2 | 3 | 4 | 5 | 6 | 7 |
| Hydroxy group-containing resin (A) | A1-1 | AcEm | 35 | 35 | 35 | 35 | 35 | 35 | 35 |
| | A1-2 | AcEm | | | | | | | |
| | A1-3 | AcEm | | | | | | | |
| | A2 | Hydroxy group-containing polyester | 10 | 10 | 10 | 10 | 10 | 10 | 10 |
| Melamine resin (B) | B-1 | Average number of functional groups: 3.1 | | | 10 | 10 | 10 | 10 | |
| | B-2 | Average number of functional groups: 2.8 | | | | | | | |
| | B-3 | Average number of functional groups: 2.1 | | | | | | | |
| | B-4 | Average number of functional groups: 1.7 | | | | | | | |
| | B-5 | Average number of functional groups: 1.6 | | | | | | | |
| | B-6 | Average number of functional groups: 1.6 | | | | | | | |
| | B-7 | Average number of functional groups: 1.3 | | | | | | | |
| | b-1 | Average number of functional groups: 1.0 | 10 | | | | | | |
| | b-2 | Average number of functional groups: 0.3 | | 10 | | | | | |
| | b-3 | Light diffusing melamine resin particles | | | | | | | 10 |
| Polyisocyanate compound (D) | D1 | Anionically modified | 45 | 45 | | | 45 | | 45 |
| | D2 | Nonionically modified | | | | | | | |
| | d1 | Blocked | | | 45 | | | | |
| | d2 | Non-hydrophilic | | | | 45 | | | |
| Total | | | 100 | 100 | 100 | 100 | 100 | 55 | 100 |
| Equivalent ratio (imino groups and the like/isocyanate groups) | | | 0.05 | 0.03 | 0.68 | 0.17 | 0.17 | - | 0.29 |
| Hardness | | | D | E | E | A | - | E | D |
| Glossy texture | | | A | A | A | E | - | A | D |
| Spray dust | | | 5 | 5 | 5 | 1 | - | 5 | - |

Examples 13 to 31 corresponding to the second embodiment were performed.

[Example 13]

(1) Preparation of first part

Into a vessel equipped with a stirrer were charged 40 parts of the hydroxy group-containing acrylic resin (A1-1), 10 parts of the hydroxy group-containing polyester resin (A2), 15 parts of the melamine resin (B-1), 10 parts of the

polyurethane resin (C-1), 122.11 parts of a coloring pigment paste, and 68 parts of ion-exchanged water, and the PH was adjusted to 8.0 with 0.01 parts of dimethylethanolamine (manufactured by Kishida Chemical Co., Ltd.). Furthermore, 1.0 parts of ADEKA NOL UH-814N (urethane association type thickening agent, 30% active component, manufactured by Asahi Denka Co., Ltd., trade name) was mixed and stirred. Thereafter, TIPAQUE CR-97 (titanium dioxide manufactured by Ishihara Sangyo Kaisha, Ltd., average primary particle size: 200 nm) was added such that a PWC of 53.5% was attained, and dispersed. Thus, a first part was obtained.

(2) Preparation of second part

25 parts of the anionically modified polyisocyanate compound (D1) and an appropriate amount of a solvent (dipropylene glycol dimethyl ether and/or ethylene glycol monobutyl acetate) were mixed, and the mixture was sufficiently stirred with a disper, affording a second part.

A water-borne coating composition and a coated article were obtained in the same manner as in Example 1 except that the first part and the second part described above were used.

[Examples 14 to 31 and Comparative Examples 8 to 11 and 13]

Water-borne coating compositions were prepared and coated articles were obtained by the same procedure as in Example 13 except that the type and blending amount of the blending components, the solid content at the time of application, and so on were changed as shown in Tables 5 to 7.

[Comparative Example 12]

A water-borne coating composition was prepared by the same procedure as in Example 13 except that the melamine resin (B-1) was added not to the first part but to the second part.

This water-borne coating composition was left at rest at 23°C, and after a lapse of 24 hours, the viscosity of the coating composition became remarkably high, so that spray coating could not be performed. Therefore, the following evaluations could not be performed.

[Table 5]

| | | Example | | | | | | | | |
|---|---|---|---|---|---|---|---|---|---|---|
| | | 13 | 14 | 15 | 16 | 17 | 18 | 19 | 20 | 21 |
| Hydroxy group-containing resin (A) | A1-1 | 40 | | 40 | 40 | 40 | 40 | 40 | 40 | 40 |
| | A1-2 | | 40 | | | | | | | |
| | A1-3 | | | | | | | | | |
| | A2 | 10 | 10 | 10 | 10 | 10 | 10 | 10 | 10 | 10 |
| Melamine resin (B) | B-1 | 15 | 15 | 15 | | | | | | |
| | B-2 | | | | 15 | | | | | |
| | B-3 | | | | | 15 | | | | |
| | B-4 | | | | | | 15 | | | |
| | B-5 | | | | | | | 15 | | |
| | B-6 | | | | | | | | 15 | |
| | B-7 | | | | | | | | | 15 |
| | b-1 | | | | | | | | | |
| | b-2 | | | | | | | | | |
| | b-3 | | | | | | | | | |
| Polyurethane resin (C) | C-1 | 10 | 10 | | 10 | 10 | 10 | 10 | 10 | 10 |
| | C-2 | | | 10 | | | | | | |
| | C-3 | | | | | | | | | |

(continued)

| | | Example | | | | | | | | |
|---|---|---|---|---|---|---|---|---|---|---|
| | | 13 | 14 | 15 | 16 | 17 | 18 | 19 | 20 | 21 |
| Polyisocyanate compound (D) | D1 | 25 | 25 | 25 | 25 | 25 | 25 | 25 | 25 | 25 |
| | D2 | | | | | | | | | |
| | d1 | | | | | | | | | |
| | d2 | | | | | | | | | |
| Total | | 100 | 100 | 100 | 100 | 100 | 100 | 100 | 100 | 100 |
| Equivalent ratio (imino groups and the like/isocyanate groups) | | 0.77 | 0.77 | 0.77 | 0.45 | 0.40 | 0.43 | 0.38 | 0.29 | 0.32 |
| Hardness | | A | A | A | A | A | B | B | B | B |
| Glossy texture | | A | A | A | A | A | A | A | A | A |
| Spray dust | | 5 | 5 | 5 | 5 | 5 | 5 | 5 | 5 | 5 |

[Table 6]

| | | Example | | | | | | | | | |
|---|---|---|---|---|---|---|---|---|---|---|---|
| | | 22 | 23 | 24 | 25 | 26 | 27 | 28 | 29 | 30 | 31 |
| Hydroxy group-containing resin (A) | A1-1 | 40 | 40 | 40 | 10 | 50 | 40 | 40 | 40 | 35 | 10 |
| | A1-2 | | | | | | | | | | |
| | A1-3 | | | | | | | | | 5 | 30 |
| | A2 | 10 | 10 | 10 | 40 | 0 | 10 | 10 | 10 | 10 | 10 |
| Melamine resin (B) | B-1 | 15 | 10 | 20 | 15 | 15 | 15 | 15 | 24 | 15 | 15 |
| | B-2 | | | | | | | | | | |
| | B-3 | | | | | | | | | | |
| | B-4 | | | | | | | | | | |
| | B-5 | | | | | | | | | | |
| | B-6 | | | | | | | | | | |
| | B-7 | | | | | | | | | | |
| | b-1 | | | | | | | | | | |
| | b-2 | | | | | | | | | | |
| | b-3 | | | | | | | | | | |
| Polyurethane resin (C) | C-1 | 10 | 10 | 10 | 10 | 10 | 10 | | 10 | | |
| | C-2 | | | | | | | | | 10 | 10 |
| | C-3 | | | | | | | 10 | | | |
| Polyisocyanate compound (D) | D1 | | 30 | 20 | 25 | 25 | 12.5 | 25 | 16 | 25 | 25 |
| | D2 | 25 | | | | | | | | | |
| | d1 | | | | | | | | | | |
| | d2 | | | | | | 12.5 | | | | |
| Total | | 100 | 100 | 100 | 100 | 100 | 100 | 100 | 100 | 100 | 100 |
| Equivalent ratio (imino groups and the like/isocyanate groups) | | 0.52 | 0.22 | 1.01 | 0.45 | 0.45 | 0.44 | 0.45 | 1.13 | 0.77 | 0.77 |

(continued)

| | Example | | | | | | | | | |
|---|---|---|---|---|---|---|---|---|---|---|
| | 22 | 23 | 24 | 25 | 26 | 27 | 28 | 29 | 30 | 31 |
| Hardness | B | B | B | B | B | B | A | C | A | A |
| Glossy texture | A | A | A | A | A | A | A | A | A | A |
| Spray dust | 5 | 5 | 5 | 5 | 5 | 5 | 3 | 5 | 5 | 5 |

[Table 7]

| | | Comparative Example | | | | | |
|---|---|---|---|---|---|---|---|
| | | 8 | 9 | 10 | 11 | 12 | 13 |
| Hydroxy group-containing resin (A) | A1-1 | 40 | 40 | 40 | 40 | 40 | 40 |
| | A1-2 | | | | | | |
| | A1-3 | | | | | | |
| | A2 | 10 | 10 | 10 | 10 | 10 | 10 |
| Melamine resin (B) | B-1 | | | 15 | 15 | 15* | 15 |
| | B-2 | | | | | | |
| | B-3 | | | | | | |
| | B-4 | | | | | | |
| | B-5 | | | | | | |
| | B-6 | | | | | | |
| | B-7 | | | | | | |
| | b-1 | 15 | | | | | |
| | b-2 | | 15 | | | | |
| | b-3 | | | | | | |
| Polyurethane resin (C) | C-1 | 10 | 10 | 10 | 10 | 10 | 10 |
| | C-2 | | | | | | |
| | C-3 | | | | | | |
| Polyisocyanate compound (D) | D1 | 25 | 25 | | | 25 | |
| | D2 | | | | | | |
| | d1 | | | 25 | | | |
| | d2 | | | | 25 | | |
| Total | | 100 | 100 | 100 | 100 | 100 | 75 |
| Equivalent ratio (imino groups and the like/isocvanate groups) | | 0.13 | 0.08 | 1.79 | 0.44 | 0.77 | - |
| Hardness | | D | E | E | A | - | E |
| Glossy texture | | A | A | A | E | - | A |
| Spray dust | | 5 | 5 | 5 | 1 | - | 5 |

All of the water-borne coating compositions of Examples were able to form coating films having high hardness while being curable at a low temperature, being superior in glossy texture, and having reduced spray dust.

In Comparative Examples 1, 2, 8, and 9, a melamine resin having a small average number of functional groups was used. It was confirmed that the coating films obtained from these water-borne coating compositions by low-temperature curing were inferior in hardness.

In Comparative Examples 3 and 10, a blocked isocyanate compound was used. It was confirmed that the coating

films obtained from this water-borne coating composition by low-temperature curing were significantly inferior in hardness.

In Comparative Examples 4 and 11, a non-hydrophilic isocyanate compound was used. It was confirmed that the coating films obtained from this water-borne coating composition by low-temperature curing were significantly inferior in glossy texture, and very much spray dusts were generated.

In Comparative Examples 5 and 12, the melamine resin was added in the second part to prepare a water-borne coating composition. This water-borne coating composition greatly increased in viscosity and was difficult to be spray-applied.

In Comparative Examples 6 and 13, no polyisocyanate compound was used. It was confirmed that the coating films obtained from this water-borne coating composition by low-temperature curing were significantly inferior in hardness.

In Comparative Example 7, a melamine resin having a large average particle size was used. The coating film obtained from this water-borne coating composition by low-temperature curing was inferior in glossy texture. This is considered to be because the melamine resin has light diffusibility.

The present disclosure includes the following embodiments.

[1] A water-borne multi-pack type coating composition comprising:

a first part including a hydroxy group-containing resin (A) and a melamine resin (B); and
a second part including a hydrophilic polyisocyanate compound (D), wherein
the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 $\mu$m, and has an average value of a total number of imino groups and methylol groups per triazine ring is more than 1, and
the hydrophilic polyisocyanate compound (D) is at least one of an ionically modified polyisocyanate compound (D1) and a nonionically modified polyisocyanate compound (D2).

[2] A water-borne multi-pack type coating composition comprising:

a first part including a hydroxy group-containing resin (A), a melamine resin (B), and a polyurethane resin (C); and
a second part including a hydrophilic polyisocyanate compound (D), wherein
the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 $\mu$m, and has an average value of a total number of imino groups and methylol groups per triazine ring is more than 1, and
the hydrophilic polyisocyanate compound (D) is at least one of an ionically modified polyisocyanate compound (D1) and a nonionically modified polyisocyanate compound (D2).

[3] The water-borne multi-pack type coating composition according to [1] or [2], wherein the ionically modified polyisocyanate compound (D1) includes at least an anionically modified polyisocyanate compound.
[4] The water-borne multi-pack type coating composition according to [2], wherein the polyurethane resin (C) has a hydroxyl value of 30 mg KOH/g or less.
[5] The water-borne multi-pack type coating composition according to any one of [1] to [4], wherein the hydroxy group-containing resin (A) has an acid value of 5 mg KOH/g or more and 70 mg KOH/g or less.
[6] The water-borne multi-pack type coating composition according to any one of [1] to [5], wherein the melamine resin (B) has a solubility parameter of 9 or more and 15 or less.
[7] The water-borne multi-pack type coating composition according to any one of [1] to [6], wherein the melamine resin (B) has a solid content of 7 parts by mass or more and 40 parts by mass or less per 100 parts by mass of a solid content of the hydroxy group-containing resin (A).
[8] The water-borne multi-pack type coating composition according to [2], wherein the melamine resin (B) has a solid content of 7 parts by mass or more and 40 parts by mass or less per 100 parts by mass of a total solid content of the hydroxy group-containing resin (A) and the polyurethane resin (C).
[9] The water-borne multi-pack type coating composition according to any one of [1] to [8], wherein an equivalent ratio of imino groups and methylol groups of the melamine resin (B) to isocyanate groups of the hydrophilic polyisocyanate compound (D) (imino groups and methylol groups/isocyanate groups) is 0.2 or more and 1.1 or less.
[10] The water-borne multi-pack type coating composition according to any one of [1] to [9], wherein the melamine resin (B) has a number average molecular weight of 300 or more and 3000 or less.
[11] A method for producing a coated article, comprising:

forming an uncured first coating film by applying the water-borne multi-pack type coating composition according

to any one of [1] to [10] onto an article to be coated;
forming an uncured clear coating film by applying a clear coating composition onto the uncured first coating film; and
curing the uncured first coating film and the uncured clear coating film by heating at 70°C or more and 110°C or less.

[12] A method for producing a coated article, comprising:

forming an uncured first coating film by applying the water-borne multi-pack type coating composition according to any one of [1] to [10] onto an article to be coated;
forming an uncured second coating film by applying a second water-borne coating composition onto the uncured first coating film,
forming an uncured clear coating film by applying a clear coating composition onto the uncured second coating film; and
curing the uncured first coating film, the uncured second coating film, and the uncured clear coating film by heating at 70°C or more and 110°C or less.

[13] The method for producing a coated article according to [11] or [12], wherein the article to be coated includes a metal portion and a resin portion.

INDUSTRIAL APPLICABILITY

According to the water-borne coating composition of the present invention, it is possible to form a coating film having high hardness while being curable at a low temperature, being superior in glossy texture, and having reduced spray dust. Therefore, it can be particularly suitably used for an article to be coated including both a metal portion and a resin portion.

The present application claims priority based on Japanese Patent Application No. 2023-013411 filed in Japan on January 31, 2023 and priority based on PCT/JP/2023/035702 filed on September 29, 2023, the entire contents of which are incorporated herein by reference.

**Claims**

**1.** A water-borne multi-pack type coating composition comprising:

a first part including a hydroxy group-containing resin (A) and a melamine resin (B); and
a second part including a hydrophilic polyisocyanate compound (D),

wherein

the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 μm, and has an average value of a total number of imino groups and methylol groups per triazine ring is more than 1, and
the hydrophilic polyisocyanate compound (D) is at least one of an ionically modified polyisocyanate compound (D1) and a nonionically modified polyisocyanate compound (D2).

**2.** A water-borne multi-pack type coating composition comprising:

a first part including a hydroxy group-containing resin (A), a melamine resin (B), and a polyurethane resin (C); and
a second part including a hydrophilic polyisocyanate compound (D),

wherein

the hydroxy group-containing resin (A) is at least one of a hydroxy group-containing acrylic resin (A1) and a hydroxy group-containing polyester resin (A2),
the melamine resin (B) is dissolved in the first part or has an average particle size of less than 1 μm, and has an average value of a total number of imino groups and methylol groups per triazine ring is more than 1, and

the hydrophilic polyisocyanate compound (D) is at least one of an ionically modified polyisocyanate compound (D1) and a nonionically modified polyisocyanate compound (D2).

3. The water-borne multi-pack type coating composition according to claim 1 or 2, wherein the ionically modified polyisocyanate compound (D1) includes at least an anionically modified polyisocyanate compound.

4. The water-borne multi-pack type coating composition according to claim 2, wherein the polyurethane resin (C) has a hydroxyl value of 30 mg KOH/g or less.

5. The water-borne multi-pack type coating composition according to any one of claims 1 to 4, wherein the hydroxy group-containing resin (A) has an acid value of 5 mg KOH/g or more and 70 mg KOH/g or less.

6. The water-borne multi-pack type coating composition according to any one of claims 1 to 5, wherein the melamine resin (B) has a solubility parameter of 9 or more and 15 or less.

7. The water-borne multi-pack type coating composition according to any one of claims 1 to 6, wherein the melamine resin (B) has a solid content of 7 parts by mass or more and 40 parts by mass or less per 100 parts by mass of a solid content of the hydroxy group-containing resin (A).

8. The water-borne multi-pack type coating composition according to claim 2, wherein the melamine resin (B) has a solid content of 7 parts by mass or more and 40 parts by mass or less per 100 parts by mass of a total solid content of the hydroxy group-containing resin (A) and the polyurethane resin (C).

9. The water-borne multi-pack type coating composition according to any one of claims 1 to 8, wherein an equivalent ratio of imino groups and methylol groups of the melamine resin (B) to isocyanate groups of the hydrophilic polyisocyanate compound (D) (imino groups and methylol groups/isocyanate groups) is 0.2 or more and 1.1 or less.

10. The water-borne multi-pack type coating composition according to any one of claims 1 to 9, wherein the melamine resin (B) has a number average molecular weight of 300 or more and 3000 or less.

11. A method for producing a coated article, comprising:

forming an uncured first coating film by applying the water-borne multi-pack type coating composition according to any one of claims 1 to 10 onto an article to be coated;
forming an uncured clear coating film by applying a clear coating composition onto the uncured first coating film; and
curing the uncured first coating film and the uncured clear coating film by heating at 70°C or more and 110°C or less.

12. A method for producing a coated article, comprising:

forming an uncured first coating film by applying the water-borne multi-pack type coating composition according to any one of claims 1 to 10 onto an article to be coated;
forming an uncured second coating film by applying a second water-borne coating composition onto the uncured first coating film,
forming an uncured clear coating film by applying a clear coating composition onto the uncured second coating film; and
curing the uncured first coating film, the uncured second coating film, and the uncured clear coating film by heating at 70°C or more and 110°C or less.

13. The method for producing a coated article according to claim 11 or 12, wherein the article to be coated includes a metal portion and a resin portion.

**INTERNATIONAL SEARCH REPORT**

International application No.
**PCT/JP2024/002250**

**A. CLASSIFICATION OF SUBJECT MATTER**

***C09D 133/00***(2006.01)i; ***B05D 1/36***(2006.01)i; ***B05D 3/00***(2006.01)i; ***B05D 3/02***(2006.01)i; ***B05D 7/24***(2006.01)i; ***C09D 5/00***(2006.01)i; ***C09D 167/00***(2006.01)i; ***C09D 175/04***(2006.01)i
FI: C09D133/00; C09D167/00; C09D175/04; C09D5/00 Z; B05D1/36 B; B05D3/02 Z; B05D3/00 D; B05D7/24 301U; B05D7/24 302V; B05D7/24 302S; B05D7/24 302T

According to International Patent Classification (IPC) or to both national classification and IPC

**B. FIELDS SEARCHED**

Minimum documentation searched (classification system followed by classification symbols)

C09D; B05D

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/064958 A1 (KANSAI PAINT CO., LTD.) 04 April 2019 (2019-04-04)<br>claim 1, paragraphs [0002], [0116], production examples 15-19, 22-25 | 1-13 |
| Y | JP 2013-53304 A (KANSAI PAINT CO., LTD.) 21 March 2013 (2013-03-21)<br>paragraph [0032] | 1-13 |
| A | JP 2003-525967 A (E.I. DU PONT DE NEMOURS AND COMPANY) 02 September 2003 (2003-09-02)<br>entire text | 1-13 |
| A | JP 2022-185278 A (DAINICHISEIKA COLOR & CHEMICALS MFG. CO., LTD.) 14 December 2022 (2022-12-14)<br>entire text | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/002250**

**C. DOCUMENTS CONSIDERED TO BE RELEVANT**

| Category* | Citation of document, with indication, where appropriate, of the relevant passages | Relevant to claim No. |
|---|---|---|
| A | JP 2019-56019 A (NIPPON PAINT AUTOMOTIVE COATINGS CO., LTD.) 11 April 2019 (2019-04-11) entire text | 1-13 |

Form PCT/ISA/210 (second sheet) (July 2022)

**INTERNATIONAL SEARCH REPORT**
**Information on patent family members**

International application No.
**PCT/JP2024/002250**

| Patent document cited in search report | Publication date (day/month/year) | Patent family member(s) | Publication date (day/month/year) |
|---|---|---|---|
| WO 2019/064958 A1 | 04 April 2019 | US 2021/0205844 A1<br>claim 1, examples<br>EP 3689476 A1<br>CN 111093841 A | |
| JP 2013-53304 A | 21 March 2013 | CN 102911563 A | |
| JP 2003-525967 A | 02 September 2003 | US 6544593 B1<br>entire text<br>EP 1163306 A1<br>CN 1370188 A<br>KR 10-2002-0000862 A | |
| JP 2022-185278 A | 14 December 2022 | (Family: none) | |
| JP 2019-56019 A | 11 April 2019 | WO 2017/131102 A1<br>entire text | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021130812 A
- JP S4224192 B
- JP S5541607 B
- JP S439076 B
- JP S4841718 B
- JP 2023013411 A
- JP 2023035702 W


### Non-patent literature cited in the description


- **C. M. HANSEN**. *J. Paint Tech*, 1967, vol. 39 (505), 104
- **TOSHIKATSU KOBAYASHI**. *Journal of the Japan Society of Color Material*, 2004, vol. 77 (4), 188-192